# EUROPEAN PATENT APPLICATION

(11) **EP 4 557 801 A1**
(43) Date of publication of application: **21.05.2025**
(21) Application number: 22950669.6
(22) Date of filing: 14.07.2022
(51) Int. Cl.: H04W 24/02

(54) **MULTI-PHYSICAL RANDOM ACCESS CHANNEL (PRACH) TRANSMISSION METHOD AND APPARATUS**

(71) Applicant: Beijing Xiaomi Mobile Software Co., Ltd., Beijing 100085 (CN)
(72) Inventor: JIANG, Xiaowei, Beijing 100085 (CN)
(74) Representative: Gunzelmann, Rainer
(86) International application number: PCT/CN2022/105835
(87) International publication number: WO 2024/011548

(57) **Abstract**

The present disclosure provides a multi-PRACH transmission method and apparatus, and relates to the technical field of mobile communications. According to the multi-PRACH transmission method provided by embodiments of the present disclosure, a terminal device and a network device respectively respond to execution of multi-PRACH transmission according to the same configuration rule, and determine, according to the position order of a random access channel (RACH) opportunity (RO), the position order of each PRACH transmission during one instance of multi-PRACH transmission. According to the multi-PRACH transmission method and apparatus disclosed by the present disclosure, a solution for solving how to configure an RO in multi-PRACH transmission is provided, and normal and ordered transmission of a plurality of Msg1 in multi-PRACH transmission is ensured.

## Description

### TECHNICAL FIELD

The disclosure relates to the field of mobile communication technologies, and in particular, to a multi PRACH transmission method and apparatus.

### BACKGROUND

With the continuous development of wireless communication, the requirements for communication capabilities are also increasing. One of the bottlenecks in uplink coverage is the Physical Random Access Channel (PRACH). In order to improve the coverage of the PRACH channel, the Third Generation Partnership Project (3GPP) Release 18 (R18) is preparing to develop a scheme based on multi PRACH transmission, which means that the UE sends multiple sg1 transmissions in one random access attempt. At present, there is an urgent need to solve how to configure a RACH occasion (RO) for multi PRACH transmission.

### SUMMARY

The present disclosure provides a multi PRACH transmission method and apparatus, providing a RO configuration for multi PRACH transmission.

Embodiments of a first aspect of the present disclosure provide a multi PRACH transmission method. The method is applied to a terminal, and includes:
in response to performing a multi PRACH transmission, determining a position order of respective PRACH transmissions in the multi PRACH transmission based on a position order of random access channel (RACH) occasions (ROs).

In some embodiments of the present disclosure, determining the position order of respective PRACH transmissions in the multi PRACH transmission based on the position order of ROs includes:
in response to first ROs associated with an SSB, mapping M consecutive or equally spaced ROs starting from the X-th RO in the first ROs to M ROs in a first transmission opportunity of the multi PRACH transmission, where X is a starting offset of the RO and M is a maximum allowed number of PRACH transmissions in the multi PRACH transmission;
mapping a second M consecutive or equally spaced ROs in the first ROs to M ROs in a second transmission opportunity of the multi PRACH transmission, and so on, until completing mapping of other M consecutive or equally spaced ROs in the first ROs to M ROs in other transmission opportunities of the multi PRACH transmission.

In some embodiments of the present disclosure, the method further includes:
in response to the terminal selecting a target SSB for the multi PRACH transmission, starting the multi PRACH transmission at the Y-th RO of a transmission opportunity of the multi PRACH transmission corresponding to the target SSB, where Y is a starting offset of the RO.

In some embodiments of the present disclosure, the method further includes:
in response to the terminal selecting a target SSB for the multi PRACH transmission, starting the multi PRACH transmission at any RO of a transmission opportunity of the multi PRACH transmission corresponding to the target SSB.

In some embodiments of the present disclosure, a number of PRACH transmissions in the multi PRACH transmission is less than or equal to M.

In some embodiments of the present disclosure, after completing one mapping of the first ROs to the ROs of the transmission opportunity of the multi PRACH transmission, the method further includes at least one of the following steps:
in response to a number of remaining ROs in the first ROs not meeting a next round mapping of the first ROs to ROs of a transmission opportunity of the multi PRACH transmission, determining that the remaining ROs in the first ROs cannot be used for the multi PRACH transmission;
   and
in response to a number of PRACH transmissions of the multi PRACH transmission being less than or equal to a number of remaining ROs in the first ROs, determining that the remaining ROs in the first ROs can be used for the multi PRACH transmissions.

In some embodiments of the present disclosure, determining the position order of respective PRACH transmissions in the multi PRACH transmission based on the position order of ROs includes:
in response to all time domain positions of the first ROs associated with an SSB, mapping M consecutive or equally spaced time domain positions starting from the z-th time domain position in the all time domain positions of the first ROs to M time domain positions in a first transmission opportunity of the multi PRACH transmission, where z is a starting offset of the time domain position and M is a maximum allowed number of PRACH transmissions in the multi PRACH transmission;
mapping a second M consecutive or equally spaced time domain positions in the all time domain positions of the first ROs to M time domain positions in a second transmission opportunity of the multi PRACH transmission, and so on, until completing mapping of M consecutive or equally spaced time domain positions at other time domain positions in the first ROs to M time domain positions in other transmission opportunities of the multi PRACH transmission.

In some embodiments, the method further includes:
in response to the terminal selecting a target SSB for the multi PRACH transmission, starting the multi PRACH transmission at the Y-th time domain position of the transmission opportunity of the multi PRACH transmission corresponding to the target SSB.

In some embodiments of the present disclosure, the method further includes:
in response to the terminal selecting a target SSB for the multi PRACH transmission, starting the multi PRACH transmission at any time domain position of the transmission opportunity of the multi PRACH transmission corresponding to the target SSB.

In some embodiments of the present disclosure, the method further includes:
in response to the terminal performing the multi PRACH transmission at a time domain position in a multi PRACH transmission opportunity, using N consecutive or equally spaced ROs starting from the p-th RO to send N PRACHs in the multi PRACH transmission at a time domain position in the multi PRACH transmission opportunity, where p is a starting offset of the RO.

In some embodiments of the present disclosure, after completing one mapping of time domain positions of the first ROs to time domain positions of the transmission opportunity of the multi PRACH transmission, the method further includes at least one of the following steps:
in response to a number of remaining time domain positions in the first ROs not meeting a next round mapping of time domain positions of the first ROs to time domain positions of the transmission opportunity of the multi PRACH transmission, determining that the remaining time domain positions in the first ROs cannot be used for the multi PRACH transmission;
   and
in response to a number of PRACH transmissions of the multi PRACH transmission being less than or equal to a number of remaining ROs in the first ROs, determining that the remaining ROs in the first ROs can be used for the multi PRACH transmissions.

In some embodiments of the present disclosure, determining the position order of respective PRACH transmissions in the multi PRACH transmission based on the position order of ROs includes:
in response to all time domain positions of the first ROs associated with an SSB, mapping M consecutive or equally spaced time domain positions starting from the z-th time domain position in the all time domain positions of the first ROs to M time domain positions in a first transmission opportunity of the multi PRACH transmission, where z is a starting offset of the time domain position and M is a maximum allowed number of PRACH transmissions in the multi PRACH transmission;
mapping a second M consecutive or equally spaced time domain positions in the all time domain positions of the first ROs to M time domain positions in a second transmission opportunity of the multi PRACH transmission, and so on, until completing mapping of M consecutive or equally spaced time domain positions at other time domain positions in the first ROs to M time domain positions in other transmission opportunities of the multi PRACH transmission.

In some embodiments of the present disclosure, the method further includes:
in response to the terminal selecting a target time domain position for the multi PRACH transmission, starting the multi PRACH transmission at the Y-th RO of a transmission opportunity of the multi PRACH transmission corresponding to the target time domain position, where Y is a starting offset of the RO.

In some embodiments of the present disclosure, the method further includes:
in response to the terminal selecting a target time domain position B for the multi PRACH transmission, starting the multi PRACH transmission at any RO of a transmission opportunity of the multi PRACH transmission corresponding to the target time domain position.

In some embodiments of the present disclosure, a number of PRACH transmissions in the multi PRACH transmission is less than or equal to M.

In some embodiments of the present disclosure, after completing one mapping of the second ROs to the ROs of the transmission opportunity of the multi PRACH transmission, the method further includes at least one of the following steps:
in response to a number of remaining ROs in the second ROs not meeting a next round mapping of the second ROs to ROs of a transmission opportunity of the multi PRACH transmission, determining that the remaining ROs in the second ROs cannot be used for the multi PRACH transmission;
   and
in response to a number of PRACH transmissions of the multi PRACH transmission being less than or equal to a number of remaining ROs in the second ROs, determining that the remaining ROs in the second ROs can be used for the multi PRACH transmissions.

In some embodiments of the present disclosure, determining the position order of respective PRACH transmissions in the multi PRACH transmission based on the position order of ROs includes:
in response to third ROs within an SSB and RO association period, mapping M consecutive or equally spaced ROs starting from the X-th RO in the third ROs to M ROs in a first transmission opportunity of the multi PRACH transmission, where X is a starting offset of the RO and M is a maximum allowed number of PRACH transmissions in the multi PRACH transmission;
mapping a second M consecutive or equally spaced ROs in the third ROs to M ROs in a second transmission opportunity of the multi PRACH transmission, and so on, until completing mapping of other M consecutive or equally spaced ROs in the third ROs to M ROs in other transmission opportunities of the multi PRACH transmission.

In some embodiments of the present disclosure, the method further includes:
in response to the terminal performing the multi PRACH transmission within the SSB and RO association period, starting the multi PRACH transmission at the Y-th RO of a transmission opportunity of the multi PRACH transmission within the SSB and RO association period, where Y is a starting offset of the RO.

In some embodiments of the present disclosure, the method further includes:
in response to the terminal performing the multi PRACH transmission within the SSB and RO association period, starting the multi PRACH transmission at any RO of a transmission opportunity of the multi PRACH transmission within the SSB and RO association period.

In some embodiments of the present disclosure, a number of PRACH transmissions in the multi PRACH transmission is less than or equal to M.

In some embodiments of the present disclosure, after completing one mapping of the third ROs to the ROs of the transmission opportunity of the multi PRACH transmission, the method further includes at least one of the following steps:
in response to a number of remaining ROs in the third ROs not meeting a next round mapping of the third ROs to ROs of a transmission opportunity of the multi PRACH transmission, determining that the remaining ROs in the third ROs cannot be used for the multi PRACH transmission;
   and
in response to a number of PRACH transmissions of the multi PRACH transmission being less than or equal to a number of remaining ROs in the third ROs, determining that the remaining ROs in the third ROs can be used for the multi PRACH transmissions.

Embodiments of a second aspect of the present disclosure provide a multi PRACH transmission method. The method is applied to a network device, and includes:
in response to performing a multi PRACH transmission, determining a position order of respective PRACH transmissions in the multi PRACH transmission based on a position order of random access channel (RACH) occasions (ROs).

In some embodiments of the present disclosure, determining the position order of respective PRACH transmissions in the multi PRACH transmission based on the position order of ROs includes:
in response to first ROs associated with an SSB, mapping M consecutive or equally spaced ROs starting from the X-th RO in the first ROs to M ROs in a first transmission opportunity of the multi PRACH transmission, where X is a starting offset of the RO and M is a maximum allowed number of PRACH transmissions in the multi PRACH transmission;
mapping a second M consecutive or equally spaced ROs in the first ROs to M ROs in a second transmission opportunity of the multi PRACH transmission, and so on, until completing mapping of other M consecutive or equally spaced ROs in the first ROs to M ROs in other transmission opportunities of the multi PRACH transmission.

In some embodiments of the present disclosure, after completing one mapping of the first ROs to the ROs of the transmission opportunity of the multi PRACH transmission, the method further includes at least one of the following steps:
in response to a number of remaining ROs in the first ROs not meeting a next round mapping of the first ROs to ROs of a transmission opportunity of the multi PRACH transmission, determining that the remaining ROs in the first ROs cannot be used for the multi PRACH transmission;
   and
in response to a number of PRACH transmissions of the multi PRACH transmission being less than or equal to a number of remaining ROs in the first ROs, determining that the remaining ROs in the first ROs can be used for the multi PRACH transmissions.

In some embodiments of the present disclosure, determining the position order of respective PRACH transmissions in the multi PRACH transmission based on the position order of ROs includes:
in response to all time domain positions of the first ROs associated with an SSB, mapping M consecutive or equally spaced time domain positions starting from the z-th time domain position in the all time domain positions of the first ROs to M time domain positions in a first transmission opportunity of the multi PRACH transmission, where z is a starting offset of the time domain position and M is a maximum allowed number of PRACH transmissions in the multi PRACH transmission;
mapping a second M consecutive or equally spaced time domain positions in the all time domain positions of the first ROs to M time domain positions in a second transmission opportunity of the multi PRACH transmission, and so on, until completing mapping of M consecutive or equally spaced time domain positions at other time domain positions in the first ROs to M time domain positions in other transmission opportunities of the multi PRACH transmission.

In some embodiments of the present disclosure, after completing one mapping of time domain positions of the first ROs to time domain positions of the transmission opportunity of the multi PRACH transmission, the method further includes at least one of the following steps:
in response to a number of remaining ROs in the first ROs not meeting a next round mapping of the first ROs to ROs of a transmission opportunity of the multi PRACH transmission, determining that the remaining ROs in the first ROs cannot be used for the multi PRACH transmission;
   and
in response to a number of PRACH transmissions of the multi PRACH transmission being less than or equal to a number of remaining ROs in the first ROs, determining that the remaining ROs in the first ROs can be used for the multi PRACH transmissions.

In some embodiments of the present disclosure, determining the position order of respective PRACH transmissions in the multi PRACH transmission based on the position order of ROs includes:
in response to second ROs associated with a time domain position, mapping M consecutive or equally spaced ROs starting from the X-th RO in the second ROs to M ROs in a first transmission opportunity of the multi PRACH transmission, where X is a starting offset of the RO and M is a maximum allowed number of PRACH transmissions in the multi PRACH transmission;
mapping a second M consecutive or equally spaced ROs in the second ROs to M ROs in a second transmission opportunity of the multi PRACH transmission, and so on, until completing mapping of other M consecutive or equally spaced ROs in the second ROs to M ROs in other transmission opportunities of the multi PRACH transmission.

In some embodiments of the present disclosure, after completing one mapping of the second ROs to the ROs of the transmission opportunity of the multi PRACH transmission, the method further includes at least one of the following steps:
in response to a number of remaining ROs in the second ROs not meeting a next round mapping of the second ROs to ROs of a transmission opportunity of the multi PRACH transmission, determining that the remaining ROs in the second ROs cannot be used for the multi PRACH transmission;
in response to a number of PRACH transmissions of the multi PRACH transmission being less than or equal to a number of remaining ROs in the second ROs, determining that the remaining ROs in the second ROs can be used for the multi PRACH transmissions.

In some embodiments of the present disclosure, determining the position order of respective PRACH transmissions in the multi PRACH transmission based on the position order of ROs includes:
in response to third ROs within an SSB and RO association period, mapping M consecutive or equally spaced ROs starting from the X-th RO in the third ROs to M ROs in a first transmission opportunity of the multi PRACH transmission, where X is a starting offset of the RO and M is a maximum allowed number of PRACH transmissions in the multi PRACH transmission;
mapping a second M consecutive or equally spaced ROs in the third ROs to M ROs in a second transmission opportunity of the multi PRACH transmission, and so on, until completing mapping of other M consecutive or equally spaced ROs in the third ROs to M ROs in other transmission opportunities of the multi PRACH transmission.

In some embodiments of the present disclosure, after completing one mapping of the third ROs to the ROs of the transmission opportunity of the multi PRACH transmission, the method further includes at least one of the following steps:
in response to a number of remaining ROs in the third ROs not meeting a next round mapping of the third ROs to ROs of a transmission opportunity of the multi PRACH transmission, determining that the remaining ROs in the third ROs cannot be used for the multi PRACH transmission;
   and
in response to a number of PRACH transmissions of the multi PRACH transmission being less than or equal to a number of remaining ROs in the third ROs, determining that the remaining ROs in the third ROs can be used for the multi PRACH transmissions.

Embodiments of a third aspect of the present disclosure provide a multi PRACH transmission apparatus. The apparatus is applied in a terminal, and includes:
a determining unit, configured to, in response to performing a multi PRACH transmission, determine a position order of respective PRACH transmissions in the multi PRACH transmission based on a position order of random access channel (RACH) occasions (ROs).

Embodiments of a fourth aspect of the present disclosure provide a multi PRACH apparatus. The apparatus is applied in a second device, and includes:
a determining unit, configured to, in response to performing a multi PRACH transmission, determine a position order of respective PRACH transmissions in the multi PRACH transmission based on a position order of random access channel (RACH) occasions (ROs).

Embodiments of a fifth aspect of the present disclosure provide a communication device. The communication device includes: a transceiver; a memory; a processor, respectively connected to the transceiver and the memory, configured to control wireless signal transmission and reception of the transceiver by executing computer executable instructions on the memory, and capable of implementing the method as described in embodiments of the first aspect or the second aspect of the present disclosure.

Embodiments of a sixth aspect of the present disclosure provide a computer storage medium. The computer storage medium is stored with computer executable instructions which, when executed by a processor, cause the method as described in embodiments of the first aspect or the second aspect of the present disclosure to be implemented.

Embodiments of the present disclosure provide a method and apparatus for multi PRACH transmission, which determines the position order of respective PRACH transmissions in the multi PRACH transmission based on the position order of the random access channel (RACH) occasions (ROs), and provides a solution to how to configure RO in multi PRACH transmission, ensuring the normal and orderly transmission of multiple Mg1s in multi PRACH transmission.

Additional aspects and advantages of this disclosure will be partially presented in the following description, some of which will become apparent from the following description, or learned through practice of this disclosure.

### BRIEF DESCRIPTION OF THE DRAWINGS

The above and/or additional aspects and advantages of the present disclosure will become apparent and easily understood from the following description of the embodiments in conjunction with the accompanying drawings, wherein:
Fig. 1 is a schematic flowchart of a multi PRACH transmission method on a terminal side according to an embodiment of the present disclosure;
Fig. 2 is a schematic flowchart of a multi PRACH transmission method on a network device side according to an embodiment of the present disclosure;
Fig. 3 is a schematic flowchart of a multi PRACH transmission method according to an embodiment of the present disclosure;
Fig. 4 is a schematic flowchart of a multi PRACH transmission method according to an embodiment of the present disclosure;
Fig. 5 is a schematic flowchart of a multi PRACH transmission method according to an embodiment of the present disclosure;
Fig. 6 is a schematic flowchart of a multi PRACH transmission method according to an embodiment of the present disclosure;
Fig. 7 is a block diagram of a multi PRACH transmission apparatus on a terminal side according to an embodiment of the present disclosure;
Fig. 8 is a block diagram of a multi PRACH transmission apparatus on a terminal side according to an embodiment of the present disclosure;
Fig. 9 is a block diagram of a multi PRACH transmission apparatus on a terminal side according to an embodiment of the present disclosure;
Fig. 10 is a block diagram of a multi PRACH transmission apparatus on a network device side according to an embodiment of the present disclosure;
Fig. 11 is a block diagram of a multi PRACH transmission apparatus on a network device side according to an embodiment of the present disclosure;
Fig. 12 is a schematic diagram of a communication device according to an embodiment of the present disclosure;
Fig. 13 is a schematic diagram of a chip provided in an embodiment of the present disclosure.

### DETAILED DESCRIPTION

The following provides a detailed description of embodiments of the present disclosure, examples of which are shown in the accompanying drawings, where the same or similar reference numerals throughout indicate the same or similar elements or elements with the same or similar functions. The embodiments described below with reference to the accompanying drawings are exemplary and intended to explain the present disclosure, and should not be construed as limiting the present disclosure.

With the continuous development of wireless communication, the requirements for communication capabilities are also increasing. One of the bottlenecks in uplink coverage is the Physical Random Access Channel (PRACH). In order to improve the coverage of the PRACH channel, 3GPP R18 is preparing to develop a scheme based on multi PRACH transmission, which means that the UE sends multiple sg1 transmissions in one attempt of random access. At present, there is an urgent need to solve how to configure RO for multi PRACH transmission.

Therefore, this disclosure proposes a multi PRACH transmission method and apparatus, providing a solution to how to configure RO in multi PRACH transmission, ensuring the normal and orderly transmission of multiple Mg1s in multi PRACH transmission.

The multi PRACH transmission or the multi PRACH transmission mentioned in embodiments of the present disclosure refer to the terminal performing multiple PRACH transmissions during the transmission of Mg1. That is, when performing PRACH transmission, multiple PRACH transmissions are performed instead of performing one PRACH transmission. In embodiments of the present disclosure, 'multiple' refers to two or more.

The switching method and apparatus provided in this disclosure will be described in detail with reference to the accompanying drawings.

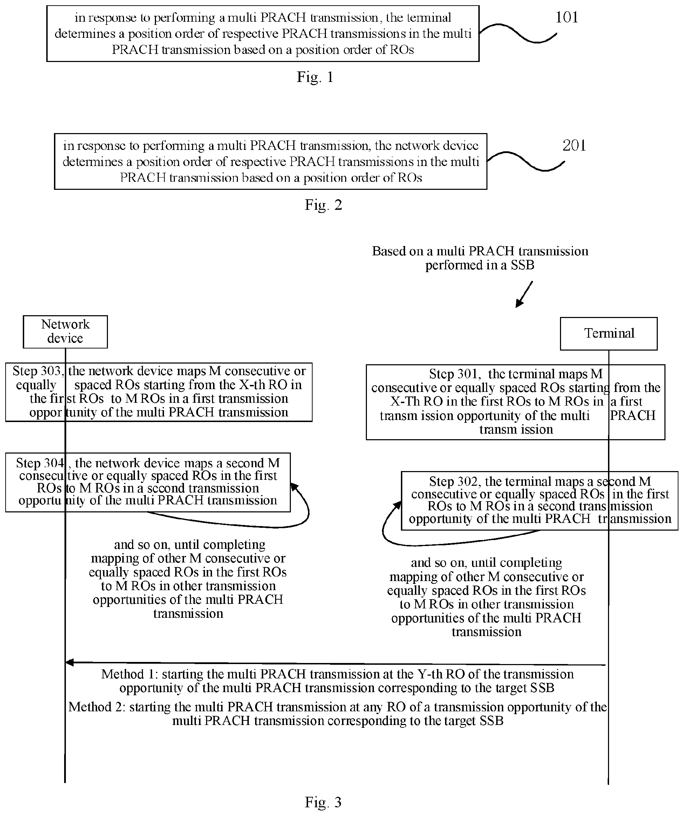

Fig. 1 is a schematic flowchart of a multi PRACH transmission method according to an embodiment of the present disclosure. As shown in Fig. 1, the method is applied to a terminal, and includes following steps.

Step 101, the terminal determines a position order of respective PRACH transmission in a multi PRACH transmission according to a position order of ROs, in response to performing the multi PRACH transmission.

In some embodiments of the present disclosure, when performing multi PRACH transmission, respective PRACH transmissions in the multi PRACH transmission needs to be performed on different ROs. Therefore, ROs of respective PRACH transmissions in the multi PRACH transmission can be selected from the ROs, and ROs of respective PRACH transmissions in the multi PRACH transmission are mapped to the ROs selected from the ROs to form the position order of respective PRACH transmissions in the multi PRACH transmission. The multi PRACH transmission can perform respective PRACH transmissions based on the mapped ROs. How to select the RO for each PRACH transmission in the multi PRACH transmission is not limited in embodiments of the present disclosure. For example, it can be based on the time and frequency domains of RO.

It should be noted that a PRACH transmission belongs to uplink transmission and is applied in a random access attempt. In order for the terminal to successfully perform random access, the network device on the network side, such as GNB, also need to know the RO of each PRACH transmission in multi PRACH transmission. This facilitates the reception of information for each PRACH transmission. Therefore, when mapping the ROs of respective PRACH transmissions in multi PRACH transmission, the terminal and network device need to use the same method to ensure the accuracy of multi PRACH transmission. The specific RO mapping configuration rules can be agreed upon by the protocol or determined by the network device and sent to the terminal, which is not limited in embodiments of the present disclosure.

As described above, embodiments of the present disclosure also provide a multi PRACH transmission method, which is applied to a network device. As shown in Fig. 2, the method includes followings.

Step 201, the network device determines a position order of respective PRACH transmission in a multi PRACH transmission according to a position order of ROs, in response to performing the multi PRACH transmission.

In embodiments of the present disclosure, in order to ensure the accuracy of each PRACH transmission in multi PRACH transmission, the network device needs to be consistent with the configuration of the position order of each PRACH transmission in multi PRACH transmission by the terminal. Therefore, when mapping the ROs of respective PRACH transmissions in multi PRACH transmission, the network device needs to use the same RO configuration rules as the terminal. The RO configuration rules can be set and issued to the terminal by the network device or agreed upon by the protocol, which is not limited in embodiments of the present disclosure.

Embodiments of the present disclosure provide a multi PRACH transmission method and apparatus, which determines the position order of respective PRACH transmissions in a multi PRACH transmission based on the position order of the random access channel (PRACH) occasions (ROs), and provides a solution to how to configure RO in multi PRACH transmission, ensuring the normal and orderly transmission of multiple Mg1s in multi PRACH transmission.

It should be noted that the random access process in NR uses beams, where SSB has multiple transmission opportunities in the time domain period and corresponding numbers, which can correspond to different beams. For the UE terminal, only when the beam scanning signal of the SSB covers the UE, the UE has the opportunity to send the preamble. When the network receives the preamble from the UE, it knows the best downlink beam, in other words, it knows which beam points to the UE. Therefore, SSB needs to have an association with the preamble, and the preamble can only be sent at RO, so SSB is associated with RO. In the time domain, one subframe (FR1) or 60KHz time slot (FR2) may have multiple PRACH time slots, and one PRACH time slot may have multiple ROs. In the frequency domain, there may be multiple ROs at the same time. One cell can have up to 8 (FR1) SSBs or 64 (FR2) SSBs, and the SSBs of the cell correspond to the ROs. The corresponding correspondence relationship can refer to existing methods, which is not limited in embodiments of the present disclosure. Based on the correspondence between SSB and RO, embodiments of the present disclosure can determine the position order of each PRACH transmission in a multi PRACH transmission according to the position order of ROs during multi PRACH transmission. Specifically, it can be based on the ROs corresponding to the same SSB, or based on the ROs corresponding to the same time domain, or based on ROs corresponding to different SSBs and different time domains, which is not limited in embodiments of the present disclosure. The following will elaborate on different scenarios separately.

Some embodiments of the present disclosure can be based on a scenario where multiple PRACH transmissions are performed in one SSB. As shown in Fig. 3, the multi PRACH transmission method includes the followings.

Step 301, in response to first ROs associated with an SSB, the terminal maps M consecutive or equally spaced ROs starting from the X-th RO in the first ROs to M ROs in a first transmission opportunity of the multi PRACH transmission, where X is a starting offset of the RO and M is a maximum allowed number of PRACH transmissions in a multi PRACH transmission.

In an embodiment of the present disclosure, the value of X is the starting offset of RO, which can be agreed upon by the system or configured by the network device and sent to the terminal, which is not limited in embodiments of the present disclosure. When the value of X is agreed upon by the system, the terminal determines the position order of each PRACH transmission in multi PRACH transmission using the corresponding mapping rule based on the predetermined system agreement. The value of X can be, for example, 0, 1, 2, 3,..., and the numbering of values starts with 0.

In an embodiment of the present disclosure, M is the maximum allowed number of PRACH transmissions for a multi PRACH transmission, and the number of PRACH transmissions in the multi PRACH transmission is less than or equal to M. The number of intervals in M equally spaced ROs can be agreed upon by the system or configured by the network devices and sent to the terminal, which is not limited in embodiments of the present disclosure.

Step 302, the terminal maps a second M consecutive or equally spaced ROs in the first ROs to M ROs in a second transmission opportunity of the multi PRACH transmission, and so on, until completing mapping of other M consecutive or equally spaced ROs in the first ROs to M ROs in other transmission opportunities of the multi PRACH transmission.

It should be noted that when mapping the M consecutive or equally spaced ROs starting from the X-th RO in the first ROs to the M ROs in the first transmission opportunity of the multi PRACH transmission, a sequential mapping method can be used, for example, mapping the RO numbered 1 in the first ROs to the first PRACH transmission in the first transmission opportunity of the multi PRACH transmission; map the second (consecutive), third (with 2 intervals), or fourth (with 3 intervals) RO in the first OR to the second PRACH transmission in the first transmission opportunity of the multi PRACH transmission, and so on.

In an embodiment of the present disclosure, based on the comparison between the number of PRACH transmissions in a multi PRACH transmission and the number of ROs associated with an SSB, if the number of ROs associated with an SSB is less than the number of PRACH transmissions in a multi PRACH transmission, then the SSB cannot be used by the terminal for multi PRACH transmission, and if the number of ROs associated with an SSB is greater than or equal to the number of PRACH transmissions in a multi PRACH transmission, the SSB can be used by the terminal for multi PRACH transmission. During transmission, the mapping of the PRACH transmission position order in a multi PRACH transmission should be performed according to the above rule.

Based on the above description, in some embodiments of the present disclosure, after completing one mapping of the first ROs to the ROs of the transmission opportunity of the multi PRACH transmission, the method further includes at least one of the following steps:
in response to a number of remaining ROs in the first ROs not meeting a next round mapping of the first ROs to ROs of a transmission opportunity of the multi PRACH transmission, determining that the remaining ROs in the first ROs cannot be used for the multi PRACH transmission; wherein when the number of remaining ROs in the first ROs does not meet the next round mapping of the first ROs to ROs of the transmission opportunity for the multi PRACH transmission, it indicates that the remaining ROs in the first ROs cannot meet the requirements for respective PRACH transmissions in the multi PRACH transmission, and therefore the remaining ROs in the first ROs cannot be used for the multi PRACH transmission;
   and
in response to a number of PRACH transmissions of the multi PRACH transmission being less than or equal to a number of remaining ROs in the first ROs, determining that the remaining ROs in the first ROs can be used for the multi PRACH transmissions; wherein when the number of PRACH transmissions of the multi PRACH transmission is less than or equal to the number of remaining ROs in the first ROs, it indicates that the number of remaining ROs in the first ROs is greater than or equal to the number of PRACH transmissions in the multi PRACH transmission, which can meet the requirements for respective PRACH transmissions in the multi PRACH transmission, and therefore the remaining ROs in the first ROs can be used for the multi PRACH transmission.

It should be noted that the above embodiments provide the case where the number of remaining ROs in the first ROs cannot be used for the next round of multi PRACH transmission, and the case where the number of remaining ROs in the first ROs can be used for the next round of multi PRACH transmission. Technicians in this field can understand that when implementing the solution in embodiments of the present disclosure, only one of the steps can be implemented, or both of the above steps can be implemented simultaneously. That is to say, when the number of remaining ROs in the first ROs cannot be used for the next round of multi PRACH transmission, the above step can be adopted; and when the number of remaining ROs in the first ROs can be used for the next round of multi PRACH transmission, the above step can be adopted or other step can be adopted. Similarly, when the number of remaining ROs in the first ROs can be used for the next round of multi PRACH transmission, the above step can be adopted; and when the number of remaining ROs in the first ROs cannot be used for the next round of multi PRACH transmission, the above step can be adopted or other steps can be adopted. In other embodiments of the present disclosure, this method can also be adopted, which will not be elaborated in the following embodiments.

Based on the mapping of each PRACH transmission RO in a multi PRACH transmission as described above, the mapping of each PRACH transmission RO in the multi PRACH transmission may be based on the number of first ROs associated with an SSB and the maximum allowed number of PRACH transmissions in a multi PRACH transmission. There may be one set of transmission opportunities for multi PRACH transmission, or multiple sets of transmission opportunities for multi PRACH transmission. When the terminal performs multi PRACH transmission, it can choose any set of transmission opportunities for multi PRACH transmission, and the specific set to be used is not limited by the embodiments of the present disclosure.

In some embodiments of the present disclosure, when the terminal performs multi PRACH transmission, embodiments of the present disclosure provide a multi PRACH transmission method, which can be implemented using but is not limited to the following methods, as shown in Fig. 3. The method includes the following methods: Method 1 and/or Method 2:
Method 1: in response to the terminal selecting a target SSB for a multi PRACH transmission, the multi PRACH transmission is initiated at the Y-th RO of the transmission opportunity of the multi PRACH transmission corresponding to the target SSB, where Y is the starting offset of the RO. When the terminal selects one target SSB, it obtains transmission opportunities for the multi PRACH transmission corresponding to the target SSB, and selects one transmission opportunity from the transmission opportunities for the multi PRACH transmission.

In embodiments of the present disclosure, the relevant content of the terminal selecting the target SSB can refer to any existing method, which is not limited in embodiments of the present disclosure. The specific implementation of selecting one transmission opportunity from the configured transmission opportunities for the multi PRACH transmission is also not limited in embodiments of the present disclosure, and can be selected by the terminal according to the actual situation.

When a transmission opportunity is selected for a multi PRACH transmission, the multi PRACH transmission is started at the Y-th RO of the transmission opportunity of the multi PRACH transmission corresponding to the target SSB, where Y is the starting offset of each PRACH transmission in the M ROs of the transmission opportunity of the multi PRACH transmission. The Y value can be agreed upon by the system or set by the network device and sent to the terminal. The specific implementation is not limited in embodiments of the present disclosure. When the Y value is agreed upon by the system, the terminal obtains the Y value based on the system agreement and performs subsequent multi PRACH transmission; when the Y value is set by the network device and sent to the terminal, the terminal receives the Y value sent by the terminal and performs multi PRACH transmission based on the Y value. The value of Y for a multi PRACH transmission performed by the terminal can be, for example, 0, 1, 2, 3,..., and the numbering of values starts with 0.

In an embodiment of the present disclosure, taking continuous intervals as an example, if the terminal wishes to use the transmission opportunity of the A-th multi PRACH transmission of the target SSB, the first PRACH transmission of the terminal's multi PRACH transmission is sent on the Y-th RO of the A-th multi PRACH transmission opportunity of the target SSB, the second PRACH transmission of the multi PRACH transmission is sent on the (Y+1)th RO of the A-th multi PRACH transmission opportunity of the target SSB, and the Mth PRACH transmission is sent on the (Y+M-1)th RO of the A-th multi PRACH transmission opportunity.

It should be noted that when the terminal starts transmitting the first PRACH transmission in the multi PRACH transmission from the Y-th RO of the target transmission opportunity during the transmission opportunity of the A-th multi PRACH transmission, if the value of M is 5 and the value of Y is 3, but the maximum number of PRACH transmissions in a multi PRACH transmission is 4, which means that there are 3 PRACH transmissions in a multi PRACH transmission, then only 3 ROs can be used in the target transmission opportunity. The RO numbers are 3, 4, and 5, respectively. Although the maximum number of PRACH transmissions in a multi PRACH transmission is 4, which is less than M, the remaining available ROs cannot perform all PRACH transmissions in a multi PRACH transmission. In this case, the terminal will sequentially perform the first, second, and third PRACH transmissions in a multi PRACH transmission starting from the third ROs. The fourth PRACH transmission is not carried out.

In addition, in addition to the above situation, when the terminal uses the A-th transmission opportunity of multi PRACH transmission for multi PRACH transmission, it starts respective PRACH transmissions of a multi PRACH transmission from the Y-th RO.

Method 2: in response to the terminal selecting a target SSB for a multi PRACH transmission, the multi PRACH transmission is started at any RO of a transmission opportunity of the multi PRACH transmission corresponding to the target SSB.

In embodiments of the present disclosure, the relevant content of the terminal selecting the target SSB can refer to any existing method, which is not limited in embodiments of the present disclosure. The specific implementation of selecting a transmission opportunity from the configured transmission opportunities of the multi PRACH transmission is not limited by embodiments of the present disclosure, and can be selected by the terminal according to the actual situation.

When a transmission opportunity is selected for a multi PRACH transmission, the multi PRACH transmission can be started at any RO of the transmission opportunity corresponding to the target SSB, as long as there are P consecutive or equally spaced ROs starting from that RO on the transmission opportunity of the multi PRACH transmission. P is the number of PRACH transmissions required for a terminal to transmit in a multi PRACH transmission. P can be defined by the network as the number of transmissions or minimum number of transmissions for a multi PRACH transmission, which is not limited in embodiments of the present disclosure.

The specific transmission of each PRACH transmission in a multi PRACH transmission can refer to the description of method one, which will not be repeated here. The difference from method one is that method one starts from a fixed RO position for each PRACH transmission in a multi PRACH transmission, while method two starts from the RO that meets the conditions for each PRACH transmission in a multi PRACH transmission.

The above description is a scenario where the terminal performs a multi PRACH transmission in an SSB. The following provides a scenario where the network device executes a multi PRACH transmission method based on a multi PRACH transmission in an SSB. As shown in Fig. 3, the method includes the followings.

Step 303, in response to first ROs associated with an SSB, the network device maps M consecutive or equally spaced ROs starting from the X-th RO in the first ROs to M ROs in a first transmission opportunity of the multi PRACH transmission, where X is a starting offset of the RO and M is a maximum allowed number of PRACH transmissions in a multi PRACH transmission.

As described above, the determination of the position order of each PRACH transmission in multi PRACH transmission by the network device based on an SSB scenario needs to be consistent with the position order of each PRACH transmission in multi PRACH transmission by the terminal. Therefore, the mapping of ROs for respective PRACH transmissions in multi PRACH transmission uses the same configuration rule, which can be set and issued to the terminal by the network device or agreed upon by protocols. The specific implementation is not limited in embodiments of the present disclosure.

The network device, in response to the first ROs associated with an SSB, maps M consecutive or equally spaced ROs starting from the X-th RO in the first ROs to M ROs in the first transmission opportunity of the multi PRACH transmission, where X is the starting offset of the RO and M is the maximum allowable number of PRACH transmissions in one multi PRACH transmission. This can refer to the relevant description on the terminal side, which will not be elaborated here in embodiments of the present disclosure.

Step 304, mapping a second M consecutive or equally spaced ROs in the first ROs to M ROs in a second transmission opportunity of the multi PRACH transmission, and so on, until completing mapping of other M consecutive or equally spaced ROs in the first ROs to M ROs in other transmission opportunities of the multi PRACH transmission.

It should be noted that in embodiments of the present disclosure, the second M consecutive or equally spaced ROs in the first ROs are mapped to M ROs in the second transmission opportunity of the multi PRACH transmission, and so on, to complete the mapping of the other M consecutive or equally spaced ROs in the first ROs to M ROs in other transmission opportunities of the multi PRACH transmission. The relevant description on the terminal side can be referred to, and will not be elaborated here in embodiments of the present disclosure.

In an embodiment of the present disclosure, based on the comparison between the number of PRACH transmissions in a multi PRACH transmission and the number of ROs associated with an SSB, if the number of ROs associated with an SSB is less than the number of PRACH transmissions in a multi PRACH transmission, then the SSB cannot be used by the terminal for multi PRACH transmission. If the number of ROs associated with an SSB is greater than or equal to the number of PRACH transmissions in a multi PRACH transmission, the SSB can be used by the terminal for multi PRACH transmission. During transmission, the mapping of the PRACH transmission position order in a multi PRACH transmission should be performed according to the above rules.

Based on the above description, in some embodiments of the present disclosure, after the network device completes one mapping of the first ROs to the ROs of the transmission opportunity of the multi PRACH transmission, the method further includes at least one of the following steps:
in response to a number of remaining ROs in the first ROs not meeting a next round mapping of the first ROs to ROs of a transmission opportunity of the multi PRACH transmission, determining that the remaining ROs in the first ROs cannot be used for the multi PRACH transmission; wherein when the number of remaining ROs in the first ROs does not meet the next round mapping of the first ROs to ROs of the transmission opportunity for the multi PRACH transmission, it indicates that the remaining ROs in the first ROs cannot meet the requirements for respective PRACH transmissions in the multi PRACH transmission, and therefore the remaining ROs in the first ROs cannot be used for the multi PRACH transmission;
   and
in response to a number of PRACH transmissions of the multi PRACH transmission being less than or equal to a number of remaining ROs in the first ROs, determining that the remaining ROs in the first ROs can be used for the multi PRACH transmissions; wherein when the number of PRACH transmissions of the multi PRACH transmission is less than or equal to the number of remaining ROs in the first ROs, it indicates that the number of remaining ROs in the first ROs is greater than or equal to the number of PRACH transmissions in the multi PRACH transmission, which can meet the requirements for respective PRACH transmissions in the multi PRACH transmission, and therefore the remaining ROs in the first ROs can be used for the multi PRACH transmission.

It should be noted that the above embodiments provide the case where the number of remaining ROs in the first ROs cannot be used for the next round of multi PRACH transmission, and the case where the number of remaining ROs in the first ROs can be used for the next round of multi PRACH transmission. Technicians in this field can understand that when implementing the solution in embodiments of the present disclosure, only one of the steps can be implemented, or both of the above steps can be implemented simultaneously. That is to say, when the number of remaining ROs in the first ROs cannot be used for the next round of multi PRACH transmission, the above step can be adopted; and when the number of remaining ROs in the first ROs can be used for the next round of multi PRACH transmission, the above step can be adopted or other step can be adopted. Similarly, when the number of remaining ROs in the first ROs can be used for the next round of multi PRACH transmission, the above step can be adopted; and when the number of remaining ROs in the first ROs cannot be used for the next round of multi PRACH transmission, the above step can be adopted or other steps can be adopted.

Embodiments of the present disclosure provide a multi PRACH transmission method. Based on the multi PRACH transmission on an SSB, in response to first ROs associated with an SSB, M consecutive or equally spaced ROs starting from the X-th RO in the first ROs are mapped to M ROs in the first transmission opportunity of the multi PRACH transmission, and the second M consecutive or equally spaced ROs in the first ROs are mapped to M ROs in the second transmission opportunity of the multi PRACH transmission, and so on, to complete the mapping of other M consecutive or equally spaced ROs in the first ROs to M ROs in other transmission opportunities in the multi PRACH transmission. When performing multi PRACH transmission, the terminal starts the multi PRACH transmission from the Y-th RO in one transmission opportunity of multi PRACH transmission, or from any RO in one transmission opportunity of multi PRACH transmission, ensuring the normal and orderly transmission of multiple Mg1s in multi PRACH transmission.

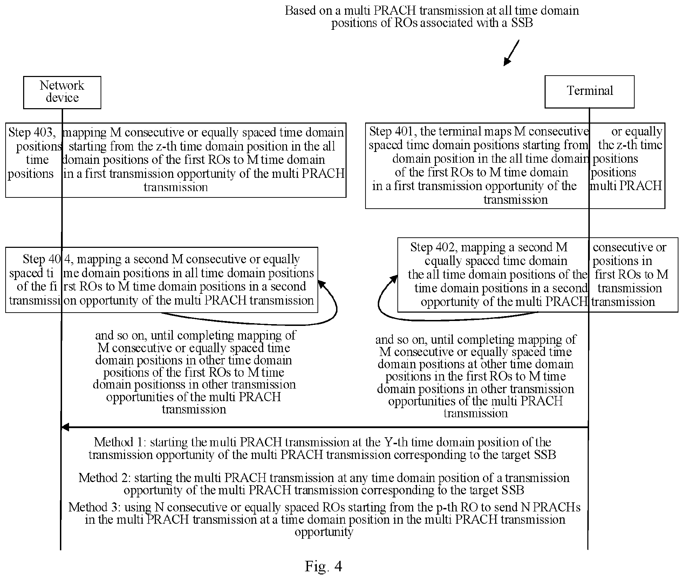

Some embodiments of the present disclosure can be based on a scenario where a multi PRACH transmission is performed at all time domain positions of the RO associated with an SSB. The determination of the position order of respective PRACH transmissions in a multi PRACH transmission based on the position order of the random access channel RACH occasions (ROs) can be achieved using, but is not limited to, the following methods, as shown in Fig. 4, applied to the terminal to perform the multi PRACH transmission method, including the followings.

Step 401, in response to all time domain positions of the first ROs associated with an SSB, the terminal maps M consecutive or equally spaced time domain positions starting from the z-th time domain position in the all time domain positions of the first ROs to M time domain positions in a first transmission opportunity of the multi PRACH transmission, where z is a starting offset of the time domain position and M is a maximum allowed number of PRACH transmissions in a multi PRACH transmission.

In an embodiment of the present disclosure, the value of z is the starting offset of RO, which can be agreed upon by the system or configured by the network device and sent to the terminal, which is not limited in embodiments of the present disclosure. When the value of z is agreed upon by the system, the terminal determines the position order of each PRACH transmission in multi PRACH transmission using the corresponding mapping rule based on the predetermined system agreement. The value of X can be, for example, 0, 1, 2, 3,..., and the numbering of values starts with 0.

In an embodiment of the present disclosure, M is the maximum allowed number of PRACH transmissions for a multi PRACH transmission, and the number of PRACH transmissions in the multi PRACH transmission is less than or equal to M. The number of intervals in M equally spaced ROs can be agreed upon by the system or configured by the network devices and sent to the terminal, which is not limited in embodiments of the present disclosure.

Step 402, the terminal maps a second M consecutive or equally spaced time domain positions in the all time domain positions of the first ROs to M time domain positions in a second transmission opportunity of the multi PRACH transmission, and so on, until completes mapping of M consecutive or equally spaced time domain positions at other time domain positions in the first ROs to M time domain positions in other transmission opportunities of the multi PRACH transmission.

It should be noted that when mapping the M consecutive or equally spaced ROs starting from the z-th RO in all time domain positions of the first ROs to the M ROs in the first transmission opportunity of the multi PRACH transmission, a sequential mapping method can be used, for example, mapping the RO numbered 1 in all time domain positions of the first ROs to the first PRACH transmission in the first transmission opportunity of the multi PRACH transmission; map the second (consecutive), third (with 2 intervals), or fourth (with 3 intervals) RO in all time domain positions of the first OR to the second PRACH transmission in the first transmission opportunity of the multi PRACH transmission, and so on.

In an embodiment of the present disclosure, based on the comparison between the number of PRACH transmissions in a multi PRACH transmission and the number of all time domain positions of the first ROs associated with an SSB, if the number of all time domain positions of the first ROs associated with an SSB is less than the number of PRACH transmissions in a multi PRACH transmission, then the SSB cannot be used by the terminal for multi PRACH transmission, and if the number of all time domain positions of the first ROs associated with an SSB is greater than or equal to the number of PRACH transmissions in a multi PRACH transmission, the SSB can be used by the terminal for multi PRACH transmission. During transmission, the mapping of the PRACH transmission position order in a multi PRACH transmission should be performed according to the above rule.

Based on the above description, in some embodiments of the present disclosure, after completing one mapping of time domain positions of the first ROs to time domain positions of the transmission opportunity of the multi PRACH transmission, the method further includes at least one of the following steps:
in response to a number of remaining time domain positions in the first ROs not meeting a next round mapping of time domain positions of the first ROs to time domain positions of the transmission opportunity of the multi PRACH transmission, determining that the remaining time domain positions in the first ROs cannot be used for the multi PRACH transmission; wherein when the number of remaining time domain positions in the first ROs does not meet the next round mapping of the first ROs to ROs of the transmission opportunity for the multi PRACH transmission, it indicates that the remaining time domain positions in the first ROs cannot meet the requirements for respective PRACH transmissions in the multi PRACH transmission, and therefore the remaining time domain positions in the first ROs cannot be used for the multi PRACH transmission;
   and
in response to a number of PRACH transmissions of the multi PRACH transmission being less than or equal to a number of remaining time domain positions in the first ROs, determining that the remaining time domain positions in the first ROs can be used for the multi PRACH transmissions; wherein when the number of PRACH transmissions of the multi PRACH transmission is less than or equal to the number of remaining time domain positions in the first ROs, it indicates that the number of remaining time domain positions in the first ROs is greater than or equal to the number of PRACH transmissions in the multi PRACH transmission, which can meet the requirements for respective PRACH transmissions in the multi PRACH transmission, and therefore the remaining time domain positions in the first ROs can be used for the multi PRACH transmission.

It should be noted that the above embodiments provide the case where the number of remaining time domain positions in the first ROs cannot be used for the next round of multi PRACH transmission, and the case where the number of remaining time domain positions in the first ROs can be used for the next round of multi PRACH transmission. Technicians in this field can understand that when implementing the solution in embodiments of the present disclosure, only one of the steps can be implemented, or both of the above steps can be implemented simultaneously. That is to say, when the number of remaining time domain positions in the first ROs cannot be used for the next round of multi PRACH transmission, the above step can be adopted; and when the number of remaining time domain positions in the first ROs can be used for the next round of multi PRACH transmission, the above step can be adopted or other step can be adopted. Similarly, when the number of remaining time domain positions in the first ROs can be used for the next round of multi PRACH transmission, the above step can be adopted; and when the number of remaining time domain positions in the first ROs cannot be used for the next round of multi PRACH transmission, the above step can be adopted or other steps can be adopted.

Based on the mapping of each PRACH transmission RO in a multi PRACH transmission as described above, the mapping of each PRACH transmission RO in the multi PRACH transmission may be based on the number of time domain positions of the first ROs associated with an SSB and the maximum allowed number of PRACH transmissions in a multi PRACH transmission. There may be one set of transmission opportunities for multi PRACH transmission, or multiple sets of transmission opportunities for multi PRACH transmission. When the terminal performs multi PRACH transmission, it can choose any set of transmission opportunities for multi PRACH transmission, and the specific set to be used is not limited by the embodiments of the present disclosure.

In some embodiments of the present disclosure, when the terminal performs multi PRACH transmission, embodiments of the present disclosure provide a multi PRACH transmission method, which can be implemented using but is not limited to the following methods, as shown in Fig. 4. The method includes at least one of the following methods: Method 1, Method 2 and Method 3:
Method 1: in response to the terminal selecting a target SSB for a multi PRACH transmission, the multi PRACH transmission is initiated at the Y-th time domain position of the transmission opportunity of the multi PRACH transmission corresponding to the target SSB, where Y is the starting offset of the RO.

When the terminal selects one target SSB, it obtains transmission opportunities for the multi PRACH transmission corresponding to the target SSB, and selects one transmission opportunity from the transmission opportunities for the multi PRACH transmission.

In embodiments of the present disclosure, the relevant content of the terminal selecting the target SSB can refer to any existing method, which is not limited in embodiments of the present disclosure. The specific implementation of selecting one transmission opportunity from the configured transmission opportunities for the multi PRACH transmission is also not limited in embodiments of the present disclosure, and can be selected by the terminal according to the actual situation.

When a transmission opportunity is selected for a multi PRACH transmission, the multi PRACH transmission can be started at the Y-th time domain position of the transmission opportunity of the multi PRACH transmission corresponding to the target SSB, where Y is the starting offset of each PRACH transmission in the M ROs of the transmission opportunity of the multi PRACH transmission. The Y value can be agreed upon by the system or set by the network device and sent to the terminal. The specific implementation is not limited in embodiments of the present disclosure. When the Y value is agreed upon by the system, the terminal obtains the Y value based on the system agreement and performs subsequent multi PRACH transmission; when the Y value is set by the network device and sent to the terminal, the terminal receives the Y value sent by the terminal and performs multi PRACH transmission based on the Y value. The value of Y for a multi PRACH transmission performed by the terminal can be, for example, 0, 1, 2, 3,..., and the numbering of values starts with 0.

Method 2: in response to the terminal selecting a target SSB for a multi PRACH transmission, the multi PRACH transmission is started at any time domain position of a transmission opportunity of the multi PRACH transmission corresponding to the target SSB.

In embodiments of the present disclosure, the relevant content of the terminal selecting the target SSB can refer to any existing method, which is not limited in embodiments of the present disclosure. The specific implementation of selecting a transmission opportunity from the configured transmission opportunities of the multi PRACH transmission is not limited by embodiments of the present disclosure, and can be selected by the terminal according to the actual situation.

When a transmission opportunity is selected for a multi PRACH transmission, the multi PRACH transmission can be started at any time domain position of the transmission opportunity corresponding to the target SSB, as long as the number of time domain positions starting from the any time domain position on the multi PRACH transmission opportunity is greater than or equal to the number of time domain positions required for the terminal to perform a multi PRACH transmission.

Method 3: in response to the terminal performing a multi PRACH transmission at a time domain position in a multi PRACH transmission opportunity, N consecutive or equally spaced ROs starting from the p -th RO are used to send N PRACHs in the multi PRACH transmission at a time domain position in the multi PRACH transmission opportunity. p is the starting offset of RO. The P value can be agreed upon by the system or set by the network device and sent to the terminal. The specific implementation is not limited in embodiments of the present disclosure. When the P value is agreed upon by the system, the terminal obtains the P value based on the system agreement and performs subsequent multi PRACH transmission; when the p value is set by the network device and sent to the terminal, the terminal receives the p value sent by the network and performs multi PRACH transmission based on the p value. The value of Y for a multi PRACH transmission performed by the terminal can be, for example, 0, 1, 2, 3,..., and the number of values 0 starts with 0.

In an embodiment of the present disclosure, N is the maximum allowed number of PRACH transmissions in a multi PRACH transmission, and the number of PRACH transmissions in the multi PRACH transmission is less than or equal to N. The number of intervals in N equally spaced ROs can be agreed upon by the system or configured by the network device and sent to the terminal. The specific implementation is not limited in embodiments of the present disclosure.

The above description is a scenario where the terminal performs a multi PRACH transmission at all time domain positions of the first ROs associated with an SSB. The following provides a scenario where the network device executes a multi PRACH transmission method at all time domain positions of the first ROs associated with in an SSB. As shown in Fig. 4, the method includes the followings.

Step 403, in response to all time domain positions of the first ROs associated with an SSB, M consecutive or equally spaced time domain positions starting from the z-th time domain position in the all time domain positions of the first ROs are mapped to M time domain positions in a first transmission opportunity of the multi PRACH transmission, where z is a starting offset of the time domain position and M is a maximum allowed number of PRACH transmissions in a multi PRACH transmission.

As described above, the determination of the position order of each PRACH transmission in multi PRACH transmission by the network device based on an scenario of all time domain positions of the first ROs associated with one SSB needs to be consistent with the position order of each PRACH transmission in multi PRACH transmission by the terminal. Therefore, the mapping of ROs for respective PRACH transmissions in multi PRACH transmission uses the same configuration rule, which can be set and sent to the terminal by the network device or agreed upon by protocols. The specific implementation is not limited in embodiments of the present disclosure.

The network device, in response to all time domain positions of the first ROs associated with one SSB, maps M consecutive or equally spaced time domain positions starting from the z-th time domain position in all time domain positions of the first ROs to M time domain positions in the first transmission opportunity of the multi PRACH transmission, where z is the starting offset of the time domain position and M is the maximum allowable number of PRACH transmissions in one multi PRACH transmission; maps M consecutive or equally spaced time domain positions starting from the X-th RO in all time domain positions of the first ROs to M ROs in the first transmission opportunity of the multi PRACH transmission, where z is the starting offset of the time domain position and M is the maximum allowable number of PRACH transmissions in one multi PRACH transmission. This can refer to the relevant description on the terminal side, which will not be elaborated here in embodiments of the present disclosure.

Step 404, mapping a second M consecutive or equally spaced time domain positions in all time domain positions of the first ROs to M time domain positions in a second transmission opportunity of the multi PRACH transmission, and so on, until completing mapping of M consecutive or equally spaced time domain positions in other time domain positions of the first ROs to M time domain positionss in other transmission opportunities of the multi PRACH transmission.

It should be noted that in embodiments of the present disclosure, the second M consecutive or equally spaced time domain positions in all time domain positions of the first ROs are mapped to M ROs in the second transmission opportunity of the multi PRACH transmission, and so on, to complete the mapping of the other M consecutive or equally spaced time domain positions in the first ROs to M ROs in other transmission opportunities of the multi PRACH transmission. The relevant description on the terminal side can be referred to, and will not be elaborated here in embodiments of the present disclosure.

In an embodiment of the present disclosure, based on the comparison between the number of PRACH transmissions in a multi PRACH transmission and the number of all time domain positions of the first ROs associated with an SSB, if the number of all time domain positions in the first ROs associated with an SSB is less than the number of PRACH transmissions in a multi PRACH transmission, then the SSB cannot be used by the terminal for multi PRACH transmission. If the number of all time domain positions in the first ROs associated with an SSB is greater than or equal to the number of PRACH transmissions in a multi PRACH transmission, the SSB can be used by the terminal for multi PRACH transmission. During transmission, the mapping of the PRACH transmission position order in a multi PRACH transmission should be performed according to the above rules.

Based on the above description, in some embodiments of the present disclosure, after the network device completes one mapping of time domain positions of the first ROs to the time domain positions of the transmission opportunity of the multi PRACH transmission, the method further includes at least one of the following steps:
in response to a number of remaining time domain positions in the first ROs not meeting a next round mapping of time domain positions of the first ROs to time domain positions of a transmission opportunity of the multi PRACH transmission, determining that the remaining time domain positions in the first ROs cannot be used for the multi PRACH transmission; wherein when the number of remaining time domain positions in the first ROs does not meet the next round mapping of time domain positions of the first ROs to ROs of the transmission opportunity for the multi PRACH transmission, it indicates that the remaining time domain positions in the first ROs cannot meet the requirements for respective PRACH transmissions in the multi PRACH transmission, and therefore the remaining time domain positions in the first ROs cannot be used for the multi PRACH transmission;
   and
in response to a number of PRACH transmissions of the multi PRACH transmission being less than or equal to a number of remaining time domain positions in the first ROs, determining that the remaining time domain positions in the first ROs can be used for the multi PRACH transmissions; wherein when the number of PRACH transmissions of the multi PRACH transmission is less than or equal to the number of remaining time domain positions in the first ROs, it indicates that the number of remaining time domain positions in the first ROs is greater than or equal to the number of PRACH transmissions in the multi PRACH transmission, which can meet the requirements for respective PRACH transmissions in the multi PRACH transmission, and therefore the remaining time domain positions in the first ROs can be used for the multi PRACH transmission.

It should be noted that the above embodiments provide the case where the number of remaining time domain positions in the first ROs cannot be used for the next round of multi PRACH transmission, and the case where the number of remaining time domain positions in the first ROs can be used for the next round of multi PRACH transmission. Technicians in this field can understand that when implementing the solution in embodiments of the present disclosure, only one of the steps can be implemented, or both of the above steps can be implemented simultaneously. That is to say, when the number of remaining time domain positions in the first ROs cannot be used for the next round of multi PRACH transmission, the above step can be adopted; and when the number of remaining time domain positions in the first ROs can be used for the next round of multi PRACH transmission, the above step can be adopted or other step can be adopted. Similarly, when the number of remaining time domain positions in the first ROs can be used for the next round of multi PRACH transmission, the above step can be adopted; and when the number of remaining time domain positions in the first ROs cannot be used for the next round of multi PRACH transmission, the above step can be adopted or other steps can be adopted.

Embodiments of the present disclosure provide a multi PRACH transmission method. When performing the multi PRACH transmission based on all time domain positions of the first ROs associated with one SSB, in response to all time domain positions of the first ROs associated with one SSB, M consecutive or equally spaced time domain positions starting from the z-th time domain position in all time domain positions of the first ROs are mapped to M time domain positions in the first transmission opportunity of the multi PRACH transmission, and the second M consecutive or equally spaced time domain positions in all time domain positions of the first ROs are mapped to M time domain positions in the second transmission opportunity of the multi PRACH transmission, and so on, to complete the mapping of M consecutive or equally spaced time domain positions in other time domain positions of the first ROs to M time domain positions in other transmission opportunities in the multi PRACH transmission. When performing multi PRACH transmission, the terminal starts the multi PRACH transmission from the z-th time domain position in one transmission opportunity of multi PRACH transmission, or send N PRACHs in the multi PRACH transmission using N consecutive or equally spaced ROs starting from the p -th RO at one time domain position in one multi PRACDH transmission opportunity, ensuring the normal and orderly transmission of multiple Mg1s in multi PRACH transmission.

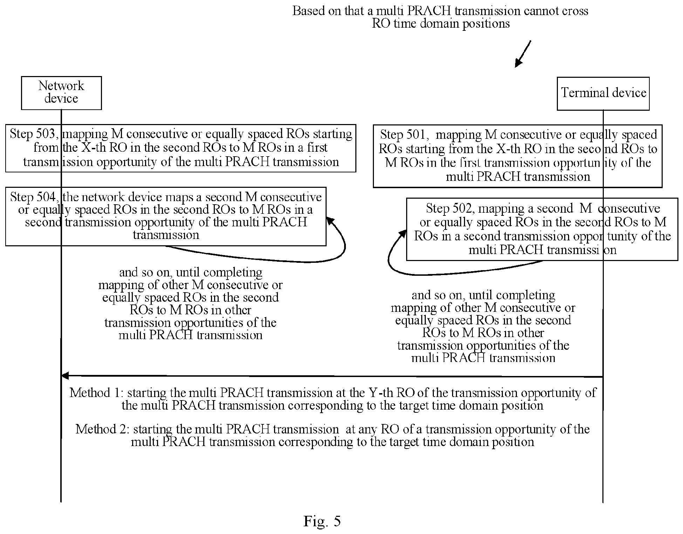

Some embodiments of the present disclosure can be based on scenarios where a multi PRACH transmission cannot cross RO time domain positions, that is, scenarios where ROs at different time domain positions cannot be used, or scenarios where ROs associated with one time domain position can be used. The determination of the position order of respective PRACH transmissions in a multi PRACH transmission based on the position order of random access channel (RACH) occasions (ROs) can be achieved using, but is not limited to, the following method. The multi PRACH transmission method, as shown in Fig. 5, is executed by the terminal, including the followings.

Step 501, in response to determining second ROs associated with a time domain position, mapping M consecutive or equally spaced ROs starting from the X-th RO in the second ROs to M ROs in the first transmission opportunity of the multi PRACH transmission.

In an embodiment of the present disclosure, the value of x is the starting offset of RO, which can be agreed upon by the system or configured by the network device and sent to the terminal, which is not limited in embodiments of the present disclosure. When the value of x is agreed upon by the system, the terminal determines the position order of each PRACH transmission in multi PRACH transmission using the corresponding mapping rule based on the predetermined system agreement. The value of X can be, for example, 0, 1, 2, 3,..., and the numbering of values starts with 0.

In an embodiment of the present disclosure, M is the maximum allowed number of PRACH transmissions for a multi PRACH transmission, and the number of PRACH transmissions in the multi PRACH transmission is less than or equal to M. The number of intervals in M equally spaced ROs can be agreed upon by the system or configured by the network devices and sent to the terminal, which is not limited in embodiments of the present disclosure.

Step 502, mapping a second M consecutive or equally spaced ROs in the second ROs to M ROs in a second transmission opportunity of the multi PRACH transmission, and so on, until completing mapping of other M consecutive or equally spaced ROs in the second ROs to M ROs in other transmission opportunities of the multi PRACH transmission.

It should be noted that when mapping the M consecutive or equally spaced ROs starting from the X-th RO in the second ROs associated with one time domain position to the M ROs in the first transmission opportunity of the multi PRACH transmission, a sequential mapping method can be used, for example, mapping the RO numbered 1 in the second ROs associated with one time domain position to the first PRACH transmission in the first transmission opportunity of the multi PRACH transmission; map the second (consecutive), third (with 2 intervals), or fourth (with 3 intervals) RO in the second ROs associated with one time domain position to the second PRACH transmission in the first transmission opportunity of the multi PRACH transmission, and so on.

In an embodiment of the present disclosure, based on the comparison between the number of PRACH transmissions in a multi PRACH transmission and the number of second ROs associated with one time domain position, if the number of second ROs associated with one time domain position is less than the number of PRACH transmissions in a multi PRACH transmission, then the remaining ROs in the second ROs associated with one time domain position cannot be used by the terminal for multi PRACH transmission, and if the number of second ROs associated with one time domain position is greater than or equal to the number of PRACH transmissions in a multi PRACH transmission, the remaining ROs in the second ROs associated with one time domain position can be used by the terminal for multi PRACH transmission. During transmission, the mapping of the PRACH transmission position order in a multi PRACH transmission should be performed according to the above rule.

Based on the above description, in some embodiments of the present disclosure, after completing one mapping of the second ROs to the ROs of the transmission opportunity of the multi PRACH transmission, the method further includes at least one of the following steps:
in response to a number of remaining ROs in the second ROs not meeting a next round mapping of the second ROs to ROs of a transmission opportunity of the multi PRACH transmission, determining that the remaining ROs in the second ROs cannot be used for the multi PRACH transmission; wherein when the number of remaining ROs in the second ROs does not meet the next round mapping of the second ROs to ROs of the transmission opportunity for the multi PRACH transmission, it indicates that the remaining ROs in the second ROs cannot meet the requirements for respective PRACH transmissions in the multi PRACH transmission, and therefore the remaining ROs in the second ROs cannot be used for the multi PRACH transmission;
   and
in response to a number of PRACH transmissions of the multi PRACH transmission being less than or equal to a number of remaining ROs in the second ROs, determining that the remaining ROs in the second ROs can be used for the multi PRACH transmissions; wherein when the number of PRACH transmissions of the multi PRACH transmission is less than or equal to the number of remaining ROs in the second ROs, it indicates that the number of remaining ROs in the second ROs is greater than or equal to the number of PRACH transmissions in the multi PRACH transmission, which can meet the requirements for respective PRACH transmissions in the multi PRACH transmission, and therefore the remaining ROs in the second ROs can be used for the multi PRACH transmission.

It should be noted that the above embodiments provide the case where the number of remaining ROs in the second ROs cannot be used for the next round of multi PRACH transmission, and the case where the number of remaining ROs in the second ROs can be used for the next round of multi PRACH transmission. Technicians in this field can understand that when implementing the solution in embodiments of the present disclosure, only one of the steps can be implemented, or both of the above steps can be implemented simultaneously. That is to say, when the number of remaining ROs in the second ROs cannot be used for the next round of multi PRACH transmission, the above step can be adopted; and when the number of remaining ROs in the second ROs can be used for the next round of multi PRACH transmission, the above step can be adopted or other step can be adopted. Similarly, when the number of remaining ROs in the second ROs can be used for the next round of multi PRACH transmission, the above step can be adopted; and when the number of remaining ROs in the second ROs cannot be used for the next round of multi PRACH transmission, the above step can be adopted or other steps can be adopted.

Based on the mapping of each PRACH transmission RO in a multi PRACH transmission as described above, the mapping of each PRACH transmission RO in the multi PRACH transmission may be based on the number of second ROs associated with one time domain position and the maximum allowed number of PRACH transmissions in a multi PRACH transmission. There may be one set of transmission opportunities for multi PRACH transmission, or multiple sets of transmission opportunities for multi PRACH transmission. When the terminal performs multi PRACH transmission, it can choose any set of transmission opportunities for multi PRACH transmission, and the specific set to be used is not limited by the embodiments of the present disclosure.

In some embodiments of the present disclosure, when the terminal performs multi PRACH transmission, embodiments of the present disclosure provide a multi PRACH transmission method, which can be implemented using but is not limited to the following methods, as shown in Fig. 5. The method includes the following methods: Method 1 and/or Method 2:
Method 1: in response to the terminal selecting a target time domain position for a multi PRACH transmission, the multi PRACH transmission is initiated at the Y-th RO of the transmission opportunity of the multi PRACH transmission corresponding to the target time domain position, where Y is the starting offset of the RO. When the terminal selects one target SSB, it obtains transmission opportunities for the multi PRACH transmission corresponding to the target SSB, and selects one transmission opportunity from the transmission opportunities for the multi PRACH transmission.

In embodiments of the present disclosure, the specific implementation of selecting one transmission opportunity from the configured transmission opportunities for the multi PRACH transmission is also not limited in embodiments of the present disclosure, and can be selected by the terminal according to the actual situation.

When a transmission opportunity is selected for a multi PRACH transmission, the multi PRACH transmission can be started at the Y-th RO of the transmission opportunity of the multi PRACH transmission corresponding to the target time domain position, where Y is the starting offset of each PRACH transmission in the M ROs of the transmission opportunity of the multi PRACH transmission. The Y value can be agreed upon by the system or set by the network device and sent to the terminal. The specific implementation is not limited in embodiments of the present disclosure. When the Y value is agreed upon by the system, the terminal obtains the Y value based on the system agreement and performs subsequent multi PRACH transmission; when the Y value is set by the network device and sent to the terminal, the terminal receives the Y value sent by the terminal and performs multi PRACH transmission based on the Y value. The value of Y for a multi PRACH transmission performed by the terminal can be, for example, 0, 1, 2, 3,..., and the numbering of values starts with 0.

Method 2: in response to the terminal selecting a target time domain position for a multi PRACH transmission, the multi PRACH transmission is started at any RO of a transmission opportunity of the multi PRACH transmission corresponding to the target time domain position.

In embodiments of the present disclosure, the specific implementation of selecting a transmission opportunity from the configured transmission opportunities of the multi PRACH transmission is not limited by embodiments of the present disclosure, and can be selected by the terminal according to the actual situation.

When a transmission opportunity is selected for a multi PRACH transmission, the multi PRACH transmission can be performed on P consecutive or equally spaced ROs starting from any RO of the transmission opportunity of the multi PRACH transmission corresponding to the target time domain position, as long as there are P consecutive or equally spaced ROs starting from that RO on the multi PRACH transmission opportunity. P is the number of PRACH transmissions required for a terminal to transmit a multi PRACH transmission. P can be defined by the network as the number of transmissions or the minimum number of transmissions for a multi PRACH transmission.

The above description is a scenario where the terminal performs a multi PRACH transmission based on second ROs associated with a time domain position. The following provides a scenario where the network device executes a multi PRACH transmission method based on second ROs associated with a time domain position. As shown in Fig. 5, the method includes the followings.

Step 503, in response to second ROs associated with a time domain position, M consecutive or equally spaced ROs starting from the X-th RO in the second ROs are mapped to M ROs in a first transmission opportunity of the multi PRACH transmission.

As described above, the determination of the position order of each PRACH transmission in multi PRACH transmission by the network device based on a scenario of second ROs associated with a time domain position needs to be consistent with the position order of each PRACH transmission in multi PRACH transmission by the terminal. Therefore, the mapping of ROs for respective PRACH transmissions in multi PRACH transmission uses the same configuration rule, which can be set and issued to the terminal by the network device or agreed upon by protocols. The specific implementation is not limited in embodiments of the present disclosure.

The network device, in response to the second ROs associated with a time domain position, maps M consecutive or equally spaced ROs starting from the X-th RO in the second ROs to M ROs in the first transmission opportunity of the multi PRACH transmission, where X is the starting offset of the time domain position and M is the maximum allowable number of PRACH transmissions in one multi PRACH transmission; maps M consecutive or equally spaced ROs starting from the X-th RO in the second ROs to M ROs in the first transmission opportunity of the multi PRACH transmission, where X is the starting offset of the time domain position and M is the maximum allowable number of PRACH transmissions in one multi PRACH transmission. This can refer to the relevant description on the terminal side, which will not be elaborated here in embodiments of the present disclosure.

Step 504, the network device maps a second M consecutive or equally spaced ROs in the second ROs to M ROs in a second transmission opportunity of the multi PRACH transmission, and so on, until completing mapping of other M consecutive or equally spaced ROs in the second ROs to M ROs in other transmission opportunities of the multi PRACH transmission.

It should be noted that in embodiments of the present disclosure, the second M consecutive or equally spaced ROs in the second ROs are mapped to M ROs in the second transmission opportunity of the multi PRACH transmission, and so on, to complete the mapping of the other M consecutive or equally spaced ROs in the second ROs to M ROs in other transmission opportunities of the multi PRACH transmission. The relevant description on the terminal side can be referred to, and will not be elaborated here in embodiments of the present disclosure.

In an embodiment of the present disclosure, based on the comparison between the number of PRACH transmissions in a multi PRACH transmission and the number of second ROs associated with a time domain position, if the number of second ROs associated with a time domain position is less than the number of PRACH transmissions in a multi PRACH transmission, then the remaining ROs in the second ROs associated with a time domain position cannot be used by the terminal for multi PRACH transmission. If the number of second ROs associated with a time domain position is greater than or equal to the number of PRACH transmissions in a multi PRACH transmission, the remaining ROs in the second ROs associated with a time domain position can be used by the terminal for multi PRACH transmission. During transmission, the mapping of the PRACH transmission position order in a multi PRACH transmission should be performed according to the above rules.

Based on the above description, in some embodiments of the present disclosure, after the network device completes one mapping of the second ROs to the ROs of the transmission opportunity of the multi PRACH transmission, the method further includes at least one of the following steps:
in response to a number of remaining ROs in the second ROs not meeting a next round mapping of the second ROs to ROs of a transmission opportunity of the multi PRACH transmission, determining that the remaining ROs in the second ROs cannot be used for the multi PRACH transmission; wherein when the number of remaining ROs in the second ROs does not meet the next round mapping of the second ROs to ROs of the transmission opportunity for the multi PRACH transmission, it indicates that the remaining ROs in the second ROs cannot meet the requirements for respective PRACH transmissions in the multi PRACH transmission, and therefore the remaining ROs in the second ROs cannot be used for the multi PRACH transmission;
   and
in response to a number of PRACH transmissions of the multi PRACH transmission being less than or equal to a number of remaining ROs in the second ROs, determining that the remaining ROs in the second ROs can be used for the multi PRACH transmissions; wherein when the number of PRACH transmissions of the multi PRACH transmission is less than or equal to the number of remaining ROs in the second ROs, it indicates that the number of remaining ROs in the second ROs is greater than or equal to the number of PRACH transmissions in the multi PRACH transmission, which can meet the requirements for respective PRACH transmissions in the multi PRACH transmission, and therefore the remaining ROs in the second ROs can be used for the multi PRACH transmission.

It should be noted that the above embodiments provide the case where the number of remaining ROs in the second ROs cannot be used for the next round of multi PRACH transmission, and the case where the number of remaining ROs in the second ROs can be used for the next round of multi PRACH transmission. Technicians in this field can understand that when implementing the solution in embodiments of the present disclosure, only one of the steps can be implemented, or both of the above steps can be implemented simultaneously. That is to say, when the number of remaining ROs in the second ROs cannot be used for the next round of multi PRACH transmission, the above step can be adopted; and when the number of remaining ROs in the second ROs can be used for the next round of multi PRACH transmission, the above step can be adopted or other step can be adopted. Similarly, when the number of remaining ROs in the second ROs can be used for the next round of multi PRACH transmission, the above step can be adopted; and when the number of remaining ROs in the second ROs cannot be used for the next round of multi PRACH transmission, the above step can be adopted or other steps can be adopted.

Embodiments of the present disclosure provide a multi PRACH transmission method. When performing the multi PRACH transmission based on second ROs as sociated with a time domain position, in response to second ROs associated with a time domain position, M consecutive or equally spaced ROs starting from the X-th RO in the second ROs are mapped to M ROs in the first transmission opportunity of the multi PRACH transmission, and the second M consecutive or equally spaced ROs in the second ROs are mapped to M ROs in the second transmission opportunity of the multi PRACH transmission, and so on, to complete the mapping of other M consecutive or equally spaced ROs in the second ROs to M ROs in other transmission opportunities in the multi PRACH transmission. When performing multi PRACH transmission, the terminal starts the multi PRACH transmission from the Y-th RO in one transmission opportunity of multi PRACH transmission, or from any RO in one transmission opportunity of multi PRACH transmission, ensuring the normal and orderly transmission of multiple Mg1s in multi PRACH transmission.

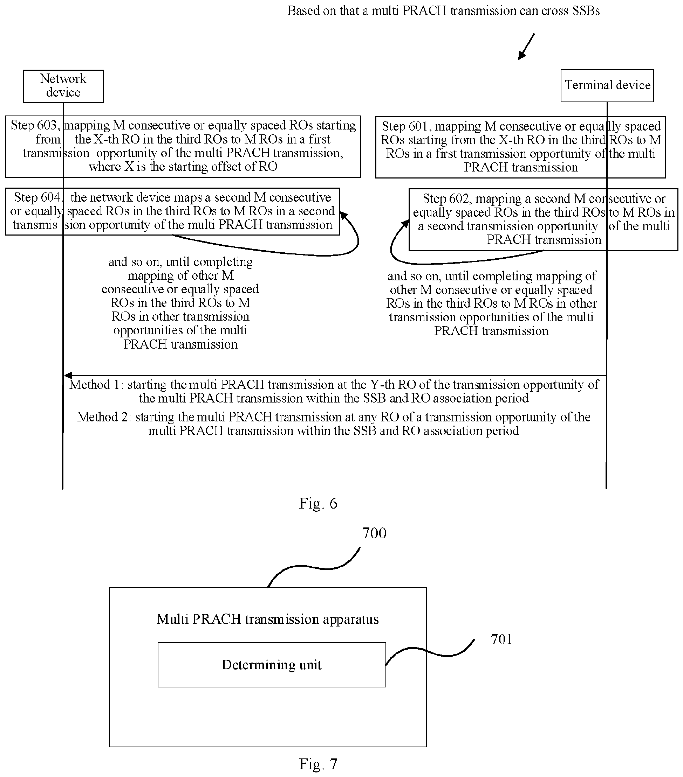

Some embodiments of the present disclosure can be based on scenarios where a multi PRACH transmission can cross SSBs, that is, based on the third ROs within the association period between SSBs and ROs. The determination of the position order of each PRACH transmission in a multi PRACH transmission based on the random access channel (RACH) occasions (ROs) can be achieved using, but is not limited to, the following method. The multi PRACH transmission method, as shown in Fig. 6, is executed by the terminal, including the followings.

Step 601, in response to third ROs within an SSB and RO association period, M consecutive or equally spaced ROs starting from the X-th RO in the third ROs are mapped to M ROs in a first transmission opportunity of the multi PRACH transmission.

In an embodiment of the present disclosure, the value of x is the starting offset of RO, which can be agreed upon by the system or configured by the network device and sent to the terminal, which is not limited in embodiments of the present disclosure. When the value of x is agreed upon by the system, the terminal determines the position order of each PRACH transmission in multi PRACH transmission using the corresponding mapping rule based on the predetermined system agreement. The value of X can be, for example, 0, 1, 2, 3,..., and the numbering of values starts with 0.

In an embodiment of the present disclosure, M is the maximum allowed number of PRACH transmissions for a multi PRACH transmission, and the number of PRACH transmissions in the multi PRACH transmission is less than or equal to M. The number of intervals in M equally spaced ROs can be agreed upon by the system or configured by the network devices and sent to the terminal, which is not limited in embodiments of the present disclosure.

Step 602, a second M consecutive or equally spaced ROs in the third ROs are mapped to M ROs in a second transmission opportunity of the multi PRACH transmission, and so on, until completing mapping of other M consecutive or equally spaced ROs in the third ROs to M ROs in other transmission opportunities of the multi PRACH transmission.

It should be noted that when mapping the M consecutive or equally spaced ROs starting from the X-th RO in the third ROs within the SSB and RO association period to the M ROs in the first transmission opportunity of the multi PRACH transmission, a sequential mapping method can be used, for example, mapping the RO numbered 1 in the third ROs within the SSB and RO association period to the first PRACH transmission in the first transmission opportunity of the multi PRACH transmission; map the second (consecutive), third (with 2 intervals), or fourth (with 3 intervals) RO in the third ROs within the SSB and RO association period to the second PRACH transmission in the first transmission opportunity of the multi PRACH transmission, and so on.

In an embodiment of the present disclosure, based on the comparison between the number of PRACH transmissions in a multi PRACH transmission and the number of third ROs within the SSB and RO association period, if the number of third ROs within the SSB and RO association period is less than the number of PRACH transmissions in a multi PRACH transmission, then the remaining ROs in the third ROs within the SSB and RO association period cannot be used by the terminal for multi PRACH transmission, and if the number of third ROs within the SSB and RO association period is greater than or equal to the number of PRACH transmissions in a multi PRACH transmission, the remaining ROs in the third ROs within the SSB and RO association period can be used by the terminal for multi PRACH transmission. During transmission, the mapping of the PRACH transmission position order in a multi PRACH transmission should be performed according to the above rule.

Based on the above description, in some embodiments of the present disclosure, after completing one mapping of the third ROs to the ROs of the transmission opportunity of the multi PRACH transmission, the method further includes at least one of the following steps:
in response to a number of remaining ROs in the third ROs not meeting a next round mapping of the third ROs to ROs of a transmission opportunity of the multi PRACH transmission, determining that the remaining ROs in the third ROs cannot be used for the multi PRACH transmission; wherein when the number of remaining ROs in the third ROs does not meet the next round mapping of the third ROs to ROs of the transmission opportunity for the multi PRACH transmission, it indicates that the remaining ROs in the third ROs cannot meet the requirements for respective PRACH transmissions in the multi PRACH transmission, and therefore the remaining ROs in the third ROs cannot be used for the multi PRACH transmission;
and in response to a number of PRACH transmissions of the multi PRACH transmission being less than or equal to a number of remaining ROs in the third ROs, determining that the remaining ROs in the third ROs can be used for the multi PRACH transmissions; wherein when the number of PRACH transmissions of the multi PRACH transmission is less than or equal to the number of remaining ROs in the third ROs, it indicates that the number of remaining ROs in the third ROs is greater than or equal to the number of PRACH transmissions in the multi PRACH transmission, which can meet the requirements for respective PRACH transmissions in the multi PRACH transmission, and therefore the remaining ROs in the third ROs can be used for the multi PRACH transmission.

It should be noted that the above embodiments provide the case where the number of remaining ROs in the third ROs cannot be used for the next round of multi PRACH transmission, and the case where the number of remaining ROs in the third ROs can be used for the next round of multi PRACH transmission. Technicians in this field can understand that when implementing the solution in embodiments of the present disclosure, only one of the steps can be implemented, or both of the above steps can be implemented simultaneously. That is to say, when the number of remaining ROs in the third ROs cannot be used for the next round of multi PRACH transmission, the above step can be adopted; and when the number of remaining ROs in the third ROs can be used for the next round of multi PRACH transmission, the above step can be adopted or other step can be adopted. Similarly, when the number of remaining ROs in the third ROs can be used for the next round of multi PRACH transmission, the above step can be adopted; and when the number of remaining ROs in the third ROs cannot be used for the next round of multi PRACH transmission, the above step can be adopted or other steps can be adopted.

Based on the mapping of each PRACH transmission RO in a multi PRACH transmission as described above, the mapping of each PRACH transmission RO in the multi PRACH transmission may be based on the number of third ROs within the SSB and RO association period and the maximum allowed number of PRACH transmissions in a multi PRACH transmission. There may be one set of transmission opportunities for multi PRACH transmission, or multiple sets of transmission opportunities for multi PRACH transmission. When the terminal performs multi PRACH transmission, it can choose any set of transmission opportunities for multi PRACH transmission, and the specific set to be used is not limited by the embodiments of the present disclosure.

In some embodiments of the present disclosure, when the terminal performs multi PRACH transmission, embodiments of the present disclosure provide a multi PRACH transmission method, which can be implemented using but is not limited to the following methods, as shown in Fig. 18. The method includes the following methods: Method 1 and/or Method 2:
Method 1: in response to the terminal performing a multi PRACH transmission within the SSB and RO association period, the multi PRACH transmission is initiated at the Y-th RO of the transmission opportunity of the multi PRACH transmission within the SSB and RO association period, where Y is the starting offset of the RO.

In embodiments of the present disclosure, the specific implementation of selecting one transmission opportunity from the configured transmission opportunities for the multi PRACH transmission is also not limited in embodiments of the present disclosure, and can be selected by the terminal according to the actual situation.

When a transmission opportunity is selected for a multi PRACH transmission, the multi PRACH transmission can be started at the Y-th RO of the transmission opportunity of the multi PRACH transmission, where Y is the starting offset of each PRACH transmission in the M ROs of the transmission opportunity of the multi PRACH transmission. The Y value can be agreed upon by the system or set by the network device and sent to the terminal. The specific implementation is not limited in embodiments of the present disclosure. When the Y value is agreed upon by the system, the terminal obtains the Y value based on the system agreement and performs subsequent multi PRACH transmission; when the Y value is set by the network device and sent to the terminal, the terminal receives the Y value sent by the terminal and performs multi PRACH transmission based on the Y value. The value of Y for a multi PRACH transmission performed by the terminal can be, for example, 0, 1, 2, 3,..., and the numbering of values starts with 0.

In an embodiment of the present disclosure, taking continuous intervals as an example, if the terminal wishes to use the A-th multi PRACH transmission opportunity, the first PRACH transmission of the terminal in a multi PRACH transmission is sent on the Y-th RO of the A-th multi PRACH transmission opportunity, the second PRACH transmission is sent on the (Y+1)th RO of the A-th multi PRACH transmission opportunity, and the M-th PRACH transmission is sent on the (Y+M-1)th RO of the A-th multi PRACH transmission opportunity.

Method 2: in response to the terminal performing a multi PRACH transmission within the SSB and RO association period, the multi PRACH transmission is started at any RO of a transmission opportunity of the multi PRACH transmission within the SSB and RO association period.

In embodiments of the present disclosure, the specific implementation of selecting a transmission opportunity from the configured transmission opportunities of the multi PRACH transmission is not limited by embodiments of the present disclosure, and can be selected by the terminal according to the actual situation.

When a transmission opportunity is selected for a multi PRACH transmission, the multi PRACH transmission can be performed on P consecutive or equally spaced ROs starting from any RO of the transmission opportunity of the multi PRACH transmission, as long as there are P consecutive or equally spaced ROs starting from that RO on the multi PRACH transmission opportunity. P is the number of PRACH transmissions required for a terminal to perform a multi PRACH transmission. P can be defined by the network as the number of transmissions or the minimum number of transmissions for a multi PRACH transmission.

The above description is a scenario where the terminal performs a multi PRACH transmission based on third ROs within the SSB and RO association period. The following provides a scenario where the network device executes a multi PRACH transmission method based on third ROs within the SSB and RO association period. As shown in Fig. 6, the method includes the followings.

Step 603, in response to third ROs within the SSB and RO association period, M consecutive or equally spaced ROs starting from the X-th RO in the third ROs are mapped to M ROs in a first transmission opportunity of the multi PRACH transmission, where X is the starting offset of RO, and M is the maximum allowed number of PRACH transmissions in a multi PRACH transmission.

As described above, the determination of the position order of each PRACH transmission in multi PRACH transmission by the network device based on a scenario of third ROs within the SSB and RO association period needs to be consistent with the position order of each PRACH transmission in multi PRACH transmission by the terminal. Therefore, the mapping of ROs for respective PRACH transmissions in multi PRACH transmission uses the same configuration rule, which can be set and issued to the terminal by the network device or agreed upon by protocols. The specific implementation is not limited in embodiments of the present disclosure.

The network device, in response to the third ROs within the SSB and RO association period, maps M consecutive or equally spaced ROs starting from the X-th RO in the third ROs to M ROs in the first transmission opportunity of the multi PRACH transmission, where X is the starting offset of the time domain position and M is the maximum allowable number of PRACH transmissions in one multi PRACH transmission; maps M consecutive or equally spaced ROs starting from the X-th RO in the third ROs to M ROs in the first transmission opportunity of the multi PRACH transmission, where X is the starting offset of RO and M is the maximum allowable number of PRACH transmissions in one multi PRACH transmission. This can refer to the relevant description on the terminal side, which will not be elaborated here in embodiments of the present disclosure.

Step 604, the network device maps a second M consecutive or equally spaced ROs in the third ROs to M ROs in a second transmission opportunity of the multi PRACH transmission, and so on, until completing mapping of other M consecutive or equally spaced ROs in the third ROs to M ROs in other transmission opportunities of the multi PRACH transmission.

It should be noted that in embodiments of the present disclosure, the second M consecutive or equally spaced ROs in the third ROs are mapped to M ROs in the second transmission opportunity of the multi PRACH transmission, and so on, to complete the mapping of the other M consecutive or equally spaced ROs in the third ROs to M ROs in other transmission opportunities of the multi PRACH transmission. The relevant description on the terminal side can be referred to, and will not be elaborated here in embodiments of the present disclosure.

In an embodiment of the present disclosure, based on the comparison between the number of PRACH transmissions in a multi PRACH transmission and the number of third ROs within the SSB and RO association period, if the number of third ROs within the SSB and RO association period is less than the number of PRACH transmissions in a multi PRACH transmission, then the remaining ROs in the third ROs within the SSB and RO association period cannot be used by the terminal for multi PRACH transmission. If the number of third ROs within the SSB and RO association period is greater than or equal to the number of PRACH transmissions in a multi PRACH transmission, the remaining ROs in the third ROs within the SSB and RO association period can be used by the terminal for multi PRACH transmission. During transmission, the mapping of the PRACH transmission position order in a multi PRACH transmission should be performed according to the above rules.

Based on the above description, in some embodiments of the present disclosure, after the network device completes one mapping of the third ROs to the ROs of the transmission opportunity of the multi PRACH transmission, the method further includes at least one of the following steps:
in response to a number of remaining ROs in the third ROs not meeting a next round mapping of the third ROs to ROs of a transmission opportunity of the multi PRACH transmission, determining that the remaining ROs in the third ROs cannot be used for the multi PRACH transmission; wherein when the number of remaining ROs in the third ROs does not meet the next round mapping of the third ROs to ROs of the transmission opportunity for the multi PRACH transmission, it indicates that the remaining ROs in the third ROs cannot meet the requirements for respective PRACH transmissions in the multi PRACH transmission, and therefore the remaining ROs in the third ROs cannot be used for the multi PRACH transmission;
and in response to a number of PRACH transmissions of the multi PRACH transmission being less than or equal to a number of remaining ROs in the third ROs, determining that the remaining ROs in the third ROs can be used for the multi PRACH transmissions; wherein when the number of PRACH transmissions of the multi PRACH transmission is less than or equal to the number of remaining ROs in the third ROs, it indicates that the number of remaining ROs in the third ROs is greater than or equal to the number of PRACH transmissions in the multi PRACH transmission, which can meet the requirements for respective PRACH transmissions in the multi PRACH transmission, and therefore the remaining ROs in the third ROs can be used for the multi PRACH transmission.

It should be noted that the above embodiments provide the case where the number of remaining R Os in the third ROs cannot be used for the next round of multi PRACH transmission, and the case where the number of remaining ROs in the third ROs can be used for the next round of multi PRACH transmission. Technicians in this field can understand that when implementing the solution in embodiments of the present disclosure, only one of the steps can be implemented, or both of the above steps can be implemented simultaneously. That is to say, when the number of remaining ROs in the third ROs cannot be used for the next round of multi PRACH transmission, the above step can be adopted; and when the number of remaining ROs in the third ROs can be used for the next round of multi PRACH transmission, the above step can be adopted or other step can be adopted. Similarly, when the number of remaining ROs in the third ROs can be used for the next round of multi PRACH transmission, the above step can be adopted; and when the number of remaining ROs in the third ROs cannot be used for the next round of multi PRACH transmission, the above step can be adopted or other steps can be adopted.

It should be noted that within the SSB and RO association period, if the remaining number of ROs is insufficient to complete a round of SSB to RO mapping after completing a certain round of SSB to RO mapping, then the remaining ROs are invalid ROs.

Embodiments of the present disclosure provide a multi PRACH transmission method. When performing the multi PRACH transmission based on third ROs within the SSB and RO association period, in response to third ROs within the SSB and RO association period, M consecutive or equally spaced ROs starting from the X-th RO in the third ROs are mapped to M ROs in the first transmission opportunity of the multi PRACH transmission, and the second M consecutive or equally spaced ROs in the third ROs are mapped to M ROs in the second transmission opportunity of the multi PRACH transmission, and so on, to complete the mapping of other M consecutive or equally spaced ROs in the third ROs to M ROs in other transmission opportunities in the multi PRACH transmission. When performing multi PRACH transmission, the terminal starts the multi PRACH transmission from the Y-th RO in one transmission opportunity of multi PRACH transmission, or from any RO in one transmission opportunity of multi PRACH transmission, ensuring the normal and orderly transmission of multiple Mg1s in multi PRACH transmission.

Corresponding to the multi PRACH transmission methods provided in the above embodiments, this disclosure also provides a multi PRACH transmission apparatus. As the multi PRACH transmission apparatus provided in this disclosure corresponds to the multi PRACH transmission methods provided in the above embodiments, the implementation of the multi PRACH transmission method is also applicable to the multi PRACH transmission apparatus provided in this embodiment, and will not be described in detail in this embodiment.

Fig. 7 is a block diagram of a multi PRACH transmission apparatus 700 provided according to an embodiment of the present disclosure. The multi PRACH transmission apparatus 700 may be used in a terminal.

As shown in Fig. 7, the multi PRACH transmission apparatus 700 may include a determining unit 701.

The determining unit 701 is configured to, in response to performing a multi PRACH transmission, determine a position order of respective PRACH transmissions in a multi PRACH transmission based on a position order of random access channel (RACH) occasions (ROs).

In some embodiments of the present disclosure, the determining unit 701 is configured to, in response to first ROs associated with an SSB, map M consecutive or equally spaced ROs starting from the X-th RO in the first ROs to M ROs in a first transmission opportunity of the multi PRACH transmission, where X is a starting offset of the RO and M is a maximum allowed number of PRACH transmissions in a multi PRACH transmission;
map a second M consecutive or equally spaced ROs in the first ROs to M ROs in a second transmission opportunity of the multi PRACH transmission, and so on, until complete mapping of other M consecutive or equally spaced ROs in the first ROs to M ROs in other transmission opportunities of the multi PRACH transmission.

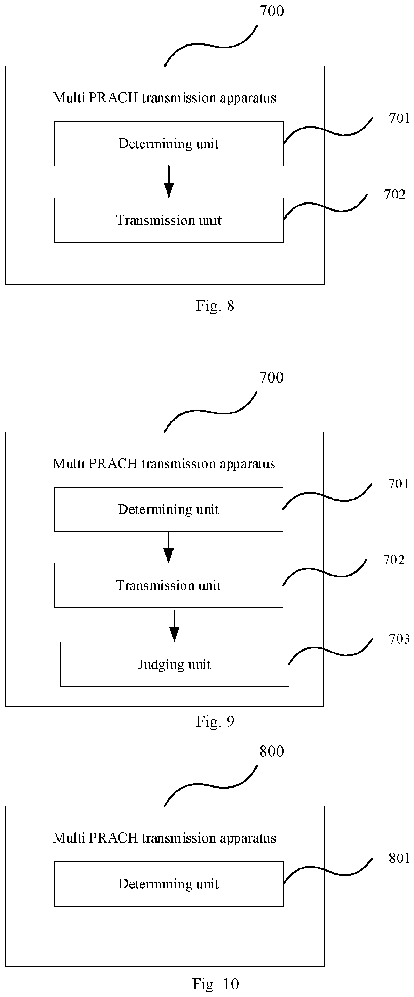

In some embodiments of the present disclosure, as shown in Fig. 8, the multi PRACH transmission apparatus further includes a transmission unit 702.

The transmission unit 702 is configured to, in response to the terminal selecting a target SSB for a multi PRACH transmission, start the multi PRACH transmission at the Y-th RO of a transmission opportunity of the multi PRACH transmission corresponding to the target SSB, where Y is a starting offset of the RO.

In some embodiments of the present disclosure, the transmission unit 702 is further configured to, in response to the terminal selecting a target SSB for a multi PRACH transmission, start the multi PRACH transmission at any RO of a transmission opportunity of the multi PRACH transmission corresponding to the target SSB.

In some embodiments of the present disclosure, a number of PRACH transmissions in a multi PRACH transmission is less than or equal to M.

In some embodiments of the present disclosure, as shown in Fig. 9, the multi PRACH transmission apparatus further includes a judging unit 703.

The judging unit 703 is configured to, after completing one mapping of the first ROs to the ROs of the transmission opportunity of the multi PRACH transmission, perform at least one of the following steps:
in response to a number of remaining ROs in the first ROs not meeting a next round mapping of the first ROs to ROs of a transmission opportunity of the multi PRACH transmission, determine that the remaining ROs in the first ROs cannot be used for the multi PRACH transmission;
or in response to a number of PRACH transmissions of the multi PRACH transmission being less than or equal to a number of remaining ROs in the first ROs, determine that the remaining ROs in the first ROs can be used for the multi PRACH transmissions.

In some embodiments of the present disclosure, the determining unit 701 is configured to, in response to all time domain positions of the first ROs associated with an SSB, map M consecutive or equally spaced time domain positions starting from the z-th time domain position in the all time domain positions of the first ROs to M time domain positions in a first transmission opportunity of the multi PRACH transmission, where z is a starting offset of the time domain position and M is a maximum allowed number of PRACH transmissions in a multi PRACH transmission;
map a second M consecutive or equally spaced time domain positions in the all time domain positions of the first ROs to M time domain positions in a second transmission opportunity of the multi PRACH transmission, and so on, until complete mapping of M consecutive or equally spaced time domain positions at other time domain positions in the first ROs to M time domain positions in other transmission opportunities of the multi PRACH transmission.

In some embodiments, the transmission unit 702 is further configured to, in response to the terminal selecting a target SSB for a multi PRACH transmission, start the multi PRACH transmission at the Y-th time domain position of the transmission opportunity of the multi PRACH transmission corresponding to the target SSB.

In some embodiments of the present disclosure, the transmission unit 702 is further configured to, in response to the terminal selecting a target SSB for a multi PRACH transmission, start the multi PRACH transmission at any time domain position of the transmission opportunity of the multi PRACH transmission corresponding to the target SSB.

In some embodiments of the present disclosure, the transmission unit 702 is further configured to, in response to the terminal performing the multi PRACH transmission at a time domain position in a multi PRACH transmission opportunity, use N consecutive or equally spaced ROs starting from the p-th RO to send N PRACHs in the multi PRACH transmission at a time domain position in the multi PRACH transmission opportunity, where p is a starting offset of the RO.

In some embodiments of the present disclosure, the judging unit 703 is further configured to, after completing one mapping of time domain positions of the first ROs to time domain positions of the transmission opportunity of the multi PRACH transmission, perform at least one of the following steps:
in response to a number of remaining time domain positions in the first ROs not meeting a next round mapping of time domain positions of the first ROs to time domain positions of the transmission opportunity of the multi PRACH transmission, determining that the remaining time domain positions in the first ROs cannot be used for the multi PRACH transmission;
or, in response to a number of PRACH transmissions of the multi PRACH transmission being less than or equal to a number of remaining ROs in the first ROs, determining that the remaining ROs in the first ROs can be used for the multi PRACH transmissions.

In some embodiments of the present disclosure, the determining unit 701 is configured to, in response to all time domain positions of the first ROs associated with an SSB, map M consecutive or equally spaced time domain positions starting from the z-th time domain position in the all time domain positions of the first ROs to M time domain positions in a first transmission opportunity of the multi PRACH transmission, where z is a starting offset of the time domain position and M is a maximum allowed number of PRACH transmissions in a multi PRACH transmission;
map a second M consecutive or equally spaced time domain positions in the all time domain positions of the first ROs to M time domain positions in a second transmission opportunity of the multi PRACH transmission, and so on, until complete mapping of M consecutive or equally spaced time domain positions at other time domain positions in the first ROs to M time domain positions in other transmission opportunities of the multi PRACH transmission.

In some embodiments of the present disclosure, the transmission unit 702 is further configured to, in response to the terminal selecting a target time domain position for a multi PRACH transmission, start the multi PRACH transmission at the Y-th RO of a transmission opportunity of the multi PRACH transmission corresponding to the target time domain position, where Y is a starting offset of the RO.

In some embodiments of the present disclosure, the transmission unit 702 is further configured to, in response to the terminal selecting a target time domain position B for a multi PRACH transmission, starting the multi PRACH transmission at any RO of a transmission opportunity of the multi PRACH transmission corresponding to the target time domain position.

In some embodiments of the present disclosure, a number of PRACH transmissions in a multi PRACH transmission is less than or equal to M.

In some embodiments of the present disclosure, the judging unit 703 is further configured to, after completing one mapping of the second ROs to the ROs of the transmission opportunity of the multi PRACH transmission, perform at least one of the following steps:
in response to a number of remaining ROs in the second ROs not meeting a next round mapping of the second ROs to ROs of a transmission opportunity of the multi PRACH transmission, determining that the remaining ROs in the second ROs cannot be used for the multi PRACH transmission;
or, in response to a number of PRACH transmissions of the multi PRACH transmission being less than or equal to a number of remaining ROs in the second ROs, determining that the remaining ROs in the second ROs can be used for the multi PRACH transmissions.

In some embodiments of the present disclosure, the determining unit 701 is configured to, in response to third ROs within an SSB and RO association period, mapM consecutive or equally spaced ROs starting from the X-th RO in the third ROs to M ROs in a first transmission opportunity of the multi PRACH transmission, where X is a starting offset of the RO and M is a maximum allowed number of PRACH transmissions in a multi PRACH transmission;
map a second M consecutive or equally spaced ROs in the third ROs to M ROs in a second transmission opportunity of the multi PRACH transmission, and so on, until completing mapping of other M consecutive or equally spaced ROs in the third ROs to M ROs in other transmission opportunities of the multi PRACH transmission.

In some embodiments of the present disclosure, the transmission unit 702 is further configured to, in response to the terminal performing a multi PRACH transmission within the SSB and RO association period, start the multi PRACH transmission at the Y-th RO of a transmission opportunity of the multi PRACH transmission within the SSB and RO association period, where Y is a starting offset of the RO.

In some embodiments of the present disclosure, the transmission unit 702 is further configured to, in response to the terminal performing a multi PRACH transmission within the SSB and RO association period, start the multi PRACH transmission at any RO of a transmission opportunity of the multi PRACH transmission within the SSB and RO association period.

In some embodiments of the present disclosure, a number of PRACH transmissions in the multi PRACH transmission is less than or equal to M.

In some embodiments of the present disclosure, the judging unit 703 is further configured to, after completing one mapping of the third ROs to the ROs of the transmission opportunity of the multi PRACH transmission, perform at least one of the following steps:
in response to a number of remaining ROs in the third ROs not meeting a next round mapping of the third ROs to ROs of a transmission opportunity of the multi PRACH transmission, determining that the remaining ROs in the third ROs cannot be used for the multi PRACH transmission;
or, in response to a number of PRACH transmissions of the multi PRACH transmission being less than or equal to a number of remaining ROs in the third ROs, determining that the remaining ROs in the third ROs can be used for the multi PRACH transmissions.

Embodiments of the present disclosure further provide a multi PRACH transmission apparatus. As shown in Fig. 10, the apparatus is applied in a network device, and the apparatus includes a determining unit 801.

The determining unit 801 is configured to, in response to performing a multi PRACH transmission, determine a position order of respective PRACH transmissions in a multi PRACH transmission based on a position order of random access channel (RACH) occasions (ROs).

In some embodiments of the present disclosure, the determining unit 801 is configured to, in response to first ROs associated with an SSB, map M consecutive or equally spaced ROs starting from the X-th RO in the first ROs to M ROs in a first transmission opportunity of the multi PRACH transmission, where X is a starting offset of the RO and M is a maximum allowed number of PRACH transmissions in a multi PRACH transmission;
map a second M consecutive or equally spaced ROs in the first ROs to M ROs in a second transmission opportunity of the multi PRACH transmission, and so on, until complete mapping of other M consecutive or equally spaced ROs in the first ROs to M ROs in other transmission opportunities of the multi PRACH transmission.

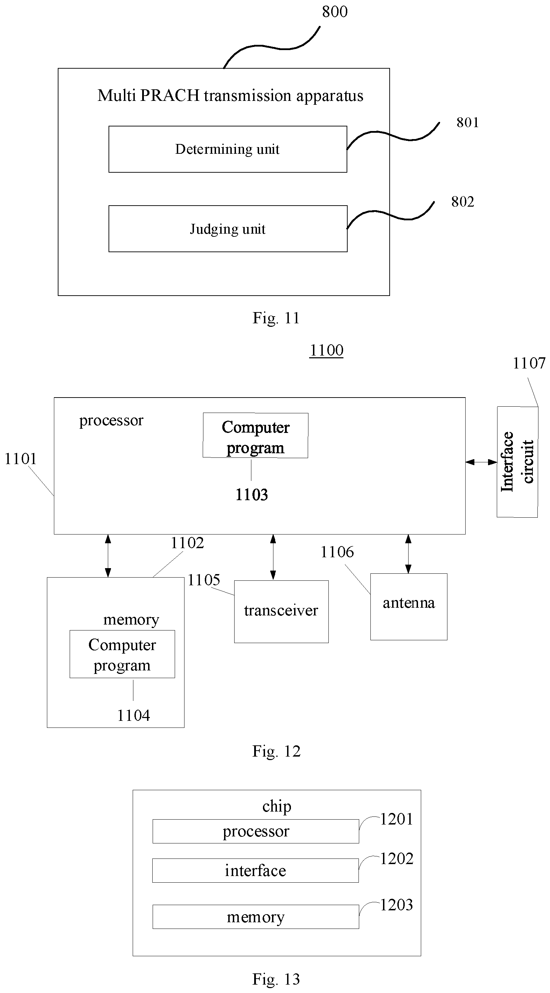

In some embodiments of the present disclosure, as shown in Fig. 11, the multi PRACH transmission apparatus further includes a judging unit 802, configured to, after completing one mapping of the first ROs to the ROs of the transmission opportunity of the multi PRACH transmission, perform at least one of the following steps:
in response to a number of remaining ROs in the first ROs not meeting a next round mapping of the first ROs to ROs of a transmission opportunity of the multi PRACH transmission, determine that the remaining ROs in the first ROs cannot be used for the multi PRACH transmission;
or in response to a number of PRACH transmissions of the multi PRACH transmission being less than or equal to a number of remaining ROs in the first ROs, determine that the remaining ROs in the first ROs can be used for the multi PRACH transmissions.

In some embodiments of the present disclosure, the determining unit 801 is configured to, in response to all time domain positions of the first ROs associated with an SSB, map M consecutive or equally spaced time domain positions starting from the z-th time domain position in the all time domain positions of the first ROs to M time domain positions in a first transmission opportunity of the multi PRACH transmission, where z is a starting offset of the time domain position and M is a maximum allowed number of PRACH transmissions in a multi PRACH transmission;
map a second M consecutive or equally spaced time domain positions in the all time domain positions of the first ROs to M time domain positions in a second transmission opportunity of the multi PRACH transmission, and so on, until complete mapping of M consecutive or equally spaced time domain positions at other time domain positions in the first ROs to M time domain positions in other transmission opportunities of the multi PRACH transmission.

In some embodiments of the present disclosure, the judging unit 802 is further configured to perform at least one of the following steps:
in response to a number of remaining time domain positions in the first ROs not meeting a next round mapping of time domain positions of the first ROs to time domain positions of the transmission opportunity of the multi PRACH transmission, determining that the remaining time domain positions in the first ROs cannot be used for the multi PRACH transmission;
or, in response to a number of PRACH transmissions of the multi PRACH transmission being less than or equal to a number of remaining ROs in the first ROs, determining that the remaining ROs in the first ROs can be used for the multi PRACH transmissions.

In some embodiments of the present disclosure, the determining unit 801 is configured to, in response to all time domain positions of the first ROs associated with an SSB, map M consecutive or equally spaced time domain positions starting from the z-th time domain position in the all time domain positions of the first ROs to M time domain positions in a first transmission opportunity of the multi PRACH transmission, where z is a starting offset of the time domain position and M is a maximum allowed number of PRACH transmissions in a multi PRACH transmission;
map a second M consecutive or equally spaced time domain positions in the all time domain positions of the first ROs to M time domain positions in a second transmission opportunity of the multi PRACH transmission, and so on, until complete mapping of M consecutive or equally spaced time domain positions at other time domain positions in the first ROs to M time domain positions in other transmission opportunities of the multi PRACH transmission.

In some embodiments of the present disclosure, the judging unit 802 is further configured to, after completing one mapping of the second ROs to the ROs of the transmission opportunity of the multi PRACH transmission, perform at least one of the following steps:
in response to a number of remaining ROs in the second ROs not meeting a next round mapping of the second ROs to ROs of a transmission opportunity of the multi PRACH transmission, determining that the remaining ROs in the second ROs cannot be used for the multi PRACH transmission;
or, in response to a number of PRACH transmissions of the multi PRACH transmission being less than or equal to a number of remaining ROs in the second ROs, determining that the remaining ROs in the second ROs can be used for the multi PRACH transmissions.

In some embodiments of the present disclosure, the determining unit 801 is configured to, in response to third ROs within an SSB and RO association period, map M consecutive or equally spaced ROs starting from the X-th RO in the third ROs to M ROs in a first transmission opportunity of the multi PRACH transmission, where X is a starting offset of the RO and M is a maximum allowed number of PRACH transmissions in a multi PRACH transmission;
map a second M consecutive or equally spaced ROs in the third ROs to M ROs in a second transmission opportunity of the multi PRACH transmission, and so on, until completing mapping of other M consecutive or equally spaced ROs in the third ROs to M ROs in other transmission opportunities of the multi PRACH transmission.

In some embodiments of the present disclosure, the judging unit 802 is further configured to, after completing one mapping of the third ROs to the ROs of the transmission opportunity of the multi PRACH transmission, perform at least one of the following steps:
in response to a number of remaining ROs in the third ROs not meeting a next round mapping of the third ROs to ROs of a transmission opportunity of the multi PRACH transmission, determining that the remaining ROs in the third ROs cannot be used for the multi PRACH transmission;
or, in response to a number of PRACH transmissions of the multi PRACH transmission being less than or equal to a number of remaining ROs in the third ROs, determining that the remaining ROs in the third ROs can be used for the multi PRACH transmissions.

Embodiments of the present disclosure provide a multi PRACH transmission apparatus, which determines the position order of each PRACH transmission in a multi PRACH transmission based on the position order of the random access channel (RACH) occasions (ROs), and provides a solution to how to configure RO in multi PRACH transmission, ensuring the normal and orderly transmission of multiple Mg1s in multi PRACH transmission.

Please refer to Fig. 12, which is a block diagram of a communication device 1100 provided in an embodiment of the present disclosure. The communication device 1100 may be a network device, or may be a user equipment, or may be a chip, a chip system, or a processor that supports the network device to implement the above methods, or may be a chip, a chip system, or a processor that supports the user equipment to implement the above methods. This device can be used to implement the methods described in the above method embodiments, which can be referred to in the description of the above method embodiments.

The communication device 1100 may include one or more processors 1101. The processor 1101 may be a general-purpose processor or a dedicated processor, etc. For example, it may be a baseband processor or a central processing unit. The baseband processor can be used to process communication protocols and communication data, while the central processor can be used to control communication devices (such as base stations, baseband chips, terminals, terminal chips, DU or CU, etc.), execute computer programs, and process data from computer programs.

Optionally, the communication device 1100 may also include one or more memories 1102, on which computer programs 1104 may be stored. The processor 1101 executes the computer programs 1104 to enable the communication device 1100 to perform the methods described in the above method embodiments. Optionally, the memory 1102 may also store data. The communication device 1100 and the memory 1102 can be set separately or integrated together.

Optionally, the communication device 1100 may also include a transceiver 1105 and an antenna 1106. The transceiver 1105 can be referred to as a transceiver unit, transceiver machine, or transceiver circuit, etc., used to achieve transceiver functions. The transceiver 1105 can include a receiver and a transmitter, where the receiver can be referred to as a receiver unit or receiving circuit, etc., used to achieve the receiving function; the transmitter can be referred to as a transmitter unit or a transmission circuit, etc., used to implement the transmission function.

Optionally, the communication device 1100 may also include one or more interface circuits 1107. The interface circuit 1107 is used to receive code instructions and transmit them to the processor 1101. The processor 1101 executes the code instructions to cause the communication device 1100 to perform the method described in the above method embodiments.

In one implementation, the processor 1101 may include a transceiver for implementing receiving and transmitting functions. For example, the transceiver can be a transceiver circuit, or an interface, or an interface circuit. The transceiver circuit, interface, or interface circuit used to implement the receiving and sending functions can be separate or integrated together. The above-mentioned transceiver circuit, interface or interface circuit can be used for reading and writing code/data, or the above-mentioned transceiver circuit, interface or interface circuit can be used for signal transmission or transfer.

In one implementation, the processor 1101 may store a computer program 1103 that runs on the processor 1101 and enables the communication device 1100 to perform the method described in the above method embodiments. The computer program 1103 may be fixed in the processor 1101, in which case the processor 1101 may be implemented by hardware.

In one implementation, the communication device 1100 may include a circuit that can perform the functions of sending, receiving, or communicating as described in the aforementioned method embodiments. The processor and transceiver described in this disclosure can be implemented on integrated circuits (ICs), analog ICs, radio frequency integrated circuits (RFICs), mixed signal ICs, application specific integrated circuits (ASICs), printed circuit boards (PCBs), electronic devices, etc. The processor and transceiver can also be manufactured using various IC process technologies, such as complementary metal oxide semiconductor (CMOS), n-type metal oxide semiconductor (NMOS), positive channel metal oxide semiconductor (PMOS), bipolar junction transistor (BJT), bipolar CMOS, silicon germanium (SiGe), gallium arsenide (GaAs), etc.

The communication device described in the above embodiments may be a network device or a user device, but the scope of the communication device described in this disclosure is not limited to this, and the structure of the communication device may not be limited by Fig. 12. The communication device may be a standalone device or a part of a larger device. For example, the communication device may be:
(1) Independent integrated circuit IC, or chip, or chip system or subsystem;
(2) A set of one or more ICs, optionally including storage components for storing data and computer programs;
(3) ASIC, such as modems;
(4) Modules that can be embedded in other devices;
(5) Receiver, terminal, intelligent terminal, cellular phone, wireless device, handheld device, mobile unit, vehicle mounted device, network device, cloud device, artificial intelligence device, etc;
(6) Others and so on.

For the communication device that can be a chip or chip system, reference can be made to the schematic diagram of the structure of the chip shown in Fig. 13. The chip shown in Fig. 13 includes processors 1201 and interfaces 1202. The number of processors 1201 can be one or more, and the number of interfaces 1202 can be multiple.

Optionally, the chip also includes a memory 1203 for storing necessary computer programs and data.

Technicians in this field can also understand that various illustrative logical blocks and steps listed in the embodiments of the present disclosure can be implemented through electronic hardware, computer software, or a combination of both. Whether such functionality is implemented through hardware or software depends on the specific application and the design requirements of the entire system. Technicians in this field can use various methods to implement the described functions for each specific application, but such implementation should not be understood as exceeding the scope of protection of the disclosed embodiments.

The present disclosure also provides a readable storage medium storing instructions that, when executed by a computer, implement the functions of any of the method embodiments described above.

The present disclosure also provides a computer program product that, when executed by a computer, implements the functions of any of the method embodiments described above.

In the above embodiments, it can be fully or partially implemented through software, hardware, firmware, or any combination thereof. When implemented using software, it can be fully or partially implemented in the form of a computer program product. The computer program product includes one or more computer programs. When loading and executing the computer program on a computer, all or part of the process or function described in embodiments of the present disclosure is generated. The computer may be a general-purpose computer, a specialized computer, a computer network, or other programmable device. The computer program can be stored in a computer-readable storage medium or transmitted from one computer-readable storage medium to another. For example, the computer program can be transmitted from a website site, computer, server, or data center to another website site, computer, server, or data center via wired (such as coaxial cable, fiber optic, digital subscriber line (DSL)) or wireless (such as infrared, wireless, microwave, etc.) means. The computer-readable storage medium can be any available medium that a computer can access, or a data storage device such as a server or data center that integrates one or more available media. The available media can be magnetic media (such as floppy disks, hard disks, magnetic tapes), optical media (such as high-density digital video discs (DVDs)), or semiconductor media (such as solid state disks (SSDs)).

Those skilled in the art can understand that the first, second, and other numerical numbers mentioned in this disclosure are only for the convenience of description and are not intended to limit the scope of the disclosed embodiments, but also indicate the order of occurrence.

"At least one" in the present disclosure can also be described as one or more, and "multiple" \can be two, three, four, or more, without limitation in this disclosure. In embodiments of the present disclosure, for a type of technical feature, the technical features in the type of technical feature are distinguished by "first", "second", "third", "A", "B", "C", and "D", etc. The technical features described by "first", "second", "third", "A", "B", "C", and "D" have no order of priority or size.

As used herein, the terms "machine readable medium" and "computer readable medium" refer to any computer program product, device, and/or apparatus (e.g., disk, optical disk, memory, programmable logic device (PLD)) used to provide machine instructions and/or data to a programmable processor, including machine readable media that receive machine instructions as machine readable signals. The term 'machine readable signal' refers to any signal used to provide machine instructions and/or data to a programmable processor.

The systems and techniques described herein can be implemented in computing systems that include backend components (e.g., as data servers), or computing systems that include middleware components (e.g., application servers), or computing systems that include frontend components (e.g., user computers with graphical user interfaces or web browsers through which users can interact with the implementation of the systems and techniques described herein), or computing systems that include any combination of such backend components, middleware components, or frontend components. The components of a system can be interconnected through any form or medium of digital data communication, such as a communication network. Examples of communication networks include local area networks (LANs), wide area networks (WANs), and the Internet.

A computer system can include a client and a server. The client and server are generally far apart from each other and typically interact through a communication network. A client server relationship is generated by running computer programs on corresponding computers that have a client server relationship with each other.

It should be understood that various forms of processes shown above can be used to reorder, add, or delete steps. For example, the steps described in this disclosure can be executed in parallel, sequentially, or in different orders, as long as they can achieve the desired results of the technical solution disclosed in this disclosure, which is not limited herein.

In addition, it should be understood that the various embodiments of the present disclosure may be implemented separately or in combination with other embodiments as permitted by the solution.

Those skilled in the art will recognize that the units and algorithm steps described in the embodiments of the present disclosure can be implemented using electronic hardware, or a combination of computer software and electronic hardware. Whether these functions are executed in hardware or software depends on the specific application and design constraints of the technical solution. Professional technicians can use different methods to achieve the described functionality for each specific application, but such implementation should not be considered beyond the scope of this disclosure.

Technicians in the relevant field can clearly understand that, for the convenience and conciseness of description, the specific working process of the system, device, and unit described above can refer to the corresponding process in the aforementioned method embodiments, which will not be repeated here.

The above is only a specific implementation of the present disclosure, but the scope of protection of the present disclosure is not limited to this. Any skilled person familiar with the technical field can easily think of changes or replacements within the technical scope disclosed in the present disclosure, which should be included in the scope of protection of the present disclosure. Therefore, the scope of protection of this disclosure should be based on the scope of protection of the claims.

The above is only a specific implementation of the present disclosure, but the scope of protection of the present disclosure is not limited to this. Any skilled person familiar with the technical field can easily think of changes or replacements within the technical scope disclosed in the present disclosure, which should be included in the scope of protection of the present disclosure. Therefore, the scope of protection of this disclosure should be based on the scope of protection of the claims.

## Claims

1. A multi physical random access channel (PRACH) transmission method, applied to a terminal, comprising:
in response to performing a multi PRACH transmission, determining a position order of respective PRACH transmissions in the multi PRACH transmission based on a position order of random access channel (RACH) occasions (ROs).

2. The method of claim 1, wherein determining the position order of respective PRACH transmissions in the multi PRACH transmission based on the position order of ROs comprises:
in response to first ROs associated with an SSB, mapping M consecutive or equally spaced ROs starting from an X-th RO in the first ROs to M ROs in a first transmission opportunity of the multi PRACH transmission, where X is a starting offset of the RO and M is a maximum allowed number of PRACH transmissions in the multi PRACH transmission; and
mapping a second M consecutive or equally spaced ROs in the first ROs to M ROs in a second transmission opportunity of the multi PRACH transmission, and so on, until completing mapping of other M consecutive or equally spaced ROs in the first ROs to M ROs in other transmission opportunities of the multi PRACH transmission.

3. The method of claim 2, further comprising:
in response to the terminal selecting a target SSB for the multi PRACH transmission, starting the multi PRACH transmission at a Y-th RO of a transmission opportunity of the multi PRACH transmission corresponding to the target SSB, where Y is a starting offset of the RO.

4. The method of claim 2, further comprising:
in response to the terminal selecting a target SSB for the multi PRACH transmission, starting the multi PRACH transmission at any RO of a transmission opportunity of the multi PRACH transmission corresponding to the target SSB.

5. The method of claim 3 or 4, wherein a number of PRACH transmissions in the multi PRACH transmission is less than or equal to M.

6. The method of claim 2, wherein after completing one mapping of the first ROs to the ROs of the transmission opportunity of the multi PRACH transmission, the method further comprises at least one of the following steps:
in response to a number of remaining ROs in the first ROs not meeting a next round mapping of the first ROs to ROs of a transmission opportunity of the multi PRACH transmission, determining that the remaining ROs in the first ROs are unusable for the multi PRACH transmission; or
in response to a number of PRACH transmissions of the multi PRACH transmission being less than or equal to a number of remaining ROs in the first ROs, determining that the remaining ROs in the first ROs are usable for the multi PRACH transmissions.

7. The method of claim 1, wherein determining the position order of respective PRACH transmissions in the multi PRACH transmission based on the position order of ROs comprises:
in response to all time domain positions of first ROs associated with an SSB, mapping M consecutive or equally spaced time domain positions starting from a z-th time domain position in the all time domain positions of the first ROs to M time domain positions in a first transmission opportunity of the multi PRACH transmission, where z is a starting offset of the time domain position and M is a maximum allowed number of PRACH transmissions in the multi PRACH transmission; and
mapping a second M consecutive or equally spaced time domain positions in the all time domain positions of the first ROs to M time domain positions in a second transmission opportunity of the multi PRACH transmission, and so on, until completing mapping of M consecutive or equally spaced time domain positions at other time domain positions in the first ROs to M time domain positions in other transmission opportunities of the multi PRACH transmission.

8. The method of claim 7, further comprising:
in response to the terminal selecting a target SSB for the multi PRACH transmission, starting the multi PRACH transmission at a Y-th time domain position of a transmission opportunity of the multi PRACH transmission corresponding to the target SSB.

9. The method of claim 8, further comprising:
in response to the terminal selecting a target SSB for the multi PRACH transmission, starting the multi PRACH transmission at any time domain position of a transmission opportunity of the multi PRACH transmission corresponding to the target SSB.

10. The method of claim 8 or 9, further comprising:
in response to the terminal performing the multi PRACH transmission at a time domain position in a multi PRACH transmission opportunity, using N consecutive or equally spaced ROs starting from a p-th RO to send N PRACHs in the multi PRACH transmission at a time domain position in the multi PRACH transmission opportunity, where p is a starting offset of the RO.

11. The method of claim 7, wherein after completing one mapping of time domain positions of the first ROs to time domain positions of the transmission opportunity of the multi PRACH transmission, the method further comprises at least one of the following steps:
in response to a number of remaining time domain positions in the first ROs not meeting a next round mapping of time domain positions of the first ROs to time domain positions of a transmission opportunity of the multi PRACH transmission, determining that the remaining time domain positions in the first ROs are unusable for the multi PRACH transmission; or
in response to a number of PRACH transmissions of the multi PRACH transmission being less than or equal to a number of remaining time domain positions in the first ROs, determining that the remaining time domain positions in the first ROs are usable for the multi PRACH transmissions.

12. The method of claim 1, wherein determining the position order of respective PRACH transmissions in the multi PRACH transmission based on the position order of ROs comprises:
in response to second ROs associated with a time domain position, mapping M consecutive or equally spaced ROs starting from an X-th RO in the second ROs to M ROs in a first transmission opportunity of the multi PRACH transmission, where X is a starting offset of the RO and M is a maximum allowed number of PRACH transmissions in the multi PRACH transmission; and
mapping a second M consecutive or equally spaced ROs in the second ROs to M ROs in a second transmission opportunity of the multi PRACH transmission, and so on, until completing mapping of other M consecutive or equally spaced ROs in the second ROs to M ROs in other transmission opportunities of the multi PRACH transmission.

13. The method of claim 12, further comprising:
in response to the terminal selecting a target time domain position for the multi PRACH transmission, starting the multi PRACH transmission at a Y-th RO of a transmission opportunity of the multi PRACH transmission corresponding to the target time domain position, where Y is a starting offset of the RO.

14. The method of claim 12, further comprising:
in response to the terminal selecting a target time domain position B for the multi PRACH transmission, starting the multi PRACH transmission at any RO of a transmission opportunity of the multi PRACH transmission corresponding to the target time domain position.

15. The method of claim 13 or 14, wherein a number of PRACH transmissions in the multi PRACH transmission is less than or equal to M.

16. The method of claim 12, wherein after completing one mapping of the second ROs to the ROs of the transmission opportunity of the multi PRACH transmission, the method further comprises at least one of the following steps:
in response to a number of remaining ROs in the second ROs not meeting a next round mapping of the second ROs to ROs of a transmission opportunity of the multi PRACH transmission, determining that the remaining ROs in the second ROs are unusable for the multi PRACH transmission; or
in response to a number of PRACH transmissions of the multi PRACH transmission being less than or equal to a number of remaining ROs in the second ROs, determining that the remaining ROs in the second ROs are usable for the multi PRACH transmissions.

17. The method of claim 1, wherein determining the position order of respective PRACH transmissions in the multi PRACH transmission based on the position order of ROs comprises:
in response to third ROs within an SSB and RO association period, mapping M consecutive or equally spaced ROs starting from an X-th RO in the third ROs to M ROs in a first transmission opportunity of the multi PRACH transmission, where X is a starting offset of the RO and M is a maximum allowed number of PRACH transmissions in the multi PRACH transmission; and
mapping a second M consecutive or equally spaced ROs in the third ROs to M ROs in a second transmission opportunity of the multi PRACH transmission, and so on, until completing mapping of other M consecutive or equally spaced ROs in the third ROs to M ROs in other transmission opportunities of the multi PRACH transmission.

18. The method of claim 17, further comprising:
in response to the terminal performing the multi PRACH transmission within the SSB and RO association period, starting the multi PRACH transmission at a Y-th RO of a transmission opportunity of the multi PRACH transmission within the SSB and RO association period, where Y is a starting offset of the RO.

19. The method of claim 17, further comprising:
in response to the terminal performing the multi PRACH transmission within the SSB and RO association period, starting the multi PRACH transmission at any RO of a transmission opportunity of the multi PRACH transmission within the SSB and RO association period.

20. The method of claim 18 or 19, wherein a number of PRACH transmissions in the multi PRACH transmission is less than or equal to M.

21. The method of claim 17, wherein after completing one mapping of the third ROs to the ROs of the transmission opportunity of the multi PRACH transmission, the method further comprises at least one of the following steps:
in response to a number remaining ROs in the third ROs not meeting a next round mapping of the third ROs to ROs of a transmission opportunity of the multi PRACH transmission, determining that the remaining ROs in the third ROs are unusable for the multi PRACH transmission; or
in response to a number of PRACH transmissions of the multi PRACH transmission being less than or equal to a number of remaining ROs in the third ROs, determining that the remaining ROs in the third ROs are usable for the multi PRACH transmissions.

22. A multi physical random access channel (PRACH) transmission method, applied to a network device, comprising:
in response to performing a multi PRACH transmission, determining a position order of respective PRACH transmissions in the multi PRACH transmission based on a position order of random access channel (RACH) occasions (ROs).

23. The method of claim 22, wherein determining the position order of respective PRACH transmissions in the multi PRACH transmission based on the position order of ROs comprises:
in response to first ROs associated with an SSB, mapping M consecutive or equally spaced ROs starting from an X-th RO in the first ROs to M ROs in a first transmission opportunity of the multi PRACH transmission, where X is a starting offset of the RO and M is a maximum allowed number of PRACH transmissions in the multi PRACH transmission; and
mapping a second M consecutive or equally spaced ROs in the first ROs to M ROs in a second transmission opportunity of the multi PRACH transmission, and so on, until completing mapping of other M consecutive or equally spaced ROs in the first ROs to M ROs in other transmission opportunities of the multi PRACH transmission.

24. The method of claim 23, wherein after completing one mapping of the first ROs to the ROs of the transmission opportunity of the multi PRACH transmission, the method further comprises at least one of the following steps:
in response to a number of remaining ROs in the first ROs not meeting a next round mapping of the first ROs to ROs of a transmission opportunity of the multi PRACH transmission, determining that the remaining ROs in the first ROs are unusable for the multi PRACH transmission; or
in response to a number of PRACH transmissions of the multi PRACH transmission being less than or equal to a number of remaining ROs in the first ROs, determining that the remaining ROs in the first ROs are usable for the multi PRACH transmissions.

25. The method of claim 22, wherein determining the position order of respective PRACH transmissions in the multi PRACH transmission based on the position order of ROs comprises:
in response to all time domain positions of first ROs associated with an SSB, mapping M consecutive or equally spaced time domain positions starting from a z-th time domain position in the all time domain positions of the first ROs to M time domain positions in a first transmission opportunity of the multi PRACH transmission, where z is a starting offset of the time domain position and M is a maximum allowed number of PRACH transmissions in the multi PRACH transmission; and
mapping a second M consecutive or equally spaced time domain positions in the all time domain positions of the first ROs to M time domain positions in a second transmission opportunity of the multi PRACH transmission, and so on, until completing mapping of M consecutive or equally spaced time domain positions at other time domain positions in the first ROs to M time domain positions in other transmission opportunities of the multi PRACH transmission.

26. The method of claim 25, wherein after completing one mapping of time domain positions of the first ROs to time domain positions of the transmission opportunity of the multi PRACH transmission, the method further comprises at least one of the following steps:
in response to a number of remaining time domain positions in the first ROs not meeting a next round mapping of time domain positions of the first ROs to time domain positions of a transmission opportunity of the multi PRACH transmission, determining that the remaining time domain positions in the first ROs are unusable for the multi PRACH transmission; or
in response to a number of PRACH transmissions of the multi PRACH transmission being less than or equal to a number of remaining time domain positions in the first ROs, determining that the remaining time domain positions in the first ROs are usable for the multi PRACH transmissions.

27. The method of claim 22, wherein determining the position order of respective PRACH transmissions in the multi PRACH transmission based on the position order of ROs comprises:
in response to second ROs associated with a time domain position, mapping M consecutive or equally spaced ROs starting from an X-th RO in the second ROs to M ROs in a first transmission opportunity of the multi PRACH transmission, where X is a starting offset of the RO and M is a maximum allowed number of PRACH transmissions in the multi PRACH transmission; and
mapping a second M consecutive or equally spaced ROs in the second ROs to M ROs in a second transmission opportunity of the multi PRACH transmission, and so on, until completing mapping of other M consecutive or equally spaced ROs in the second ROs to M ROs in other transmission opportunities of the multi PRACH transmission.

28. The method of claim 27, wherein after completing one mapping of the second ROs to the ROs of the transmission opportunity of the multi PRACH transmission, the method further comprises at least one of the following steps:
in response to a number of remaining ROs in the second ROs not meeting a next round mapping of the second ROs to ROs of a transmission opportunity of the multi PRACH transmission, determining that the remaining ROs in the second ROs are unusable for the multi PRACH transmission; or
in response to a number of PRACH transmissions of the multi PRACH transmission being less than or equal to a number of remaining ROs in the second ROs, determining that the remaining ROs in the second ROs are usable for the multi PRACH transmissions.

29. The method of claim 22, wherein determining the position order of respective PRACH transmissions in the multi PRACH transmission based on the position order of ROs comprises:
in response to third ROs within an SSB and RO association period, mapping M consecutive or equally spaced ROs starting from an X-th RO in the third ROs to M ROs in a first transmission opportunity of the multi PRACH transmission, where X is a starting offset of the RO and M is a maximum allowed number of PRACH transmissions in the multi PRACH transmission; and
mapping a second M consecutive or equally spaced ROs in the third ROs to M ROs in a second transmission opportunity of the multi PRACH transmission, and so on, until completing mapping of other M consecutive or equally spaced ROs in the third ROs to M ROs in other transmission opportunities of the multi PRACH transmission.

30. The method of claim 27, wherein after completing one mapping of the third ROs to the ROs of the transmission opportunity of the multi PRACH transmission, the method further comprises at least one of the following steps:
in response to a number of remaining ROs in the third ROs not meeting a next round mapping of the third ROs to ROs of a transmission opportunity of the multi PRACH transmission, determining that the remaining ROs in the third ROs are unusable for the multi PRACH transmission; or
in response to a number of PRACH transmissions of the multi PRACH transmission being less than or equal to a number of remaining ROs in the third ROs, determining that the remaining ROs in the third ROs are usable for the multi PRACH transmissions.

31. A multi physical random access channel (PRACH) transmission apparatus, applied in a terminal, comprising:
a determining unit, configured to, in response to performing a multi PRACH transmission, determine a position order of respective PRACH transmissions in the multi PRACH transmission based on a position order of random access channel (RACH) occasions (ROs).

32. A multi physical random access channel (PRACH) transmission apparatus, applied in a network device, comprising:
a determining unit, configured to, in response to performing a multi PRACH transmission, determine a position order of respective PRACH transmissions in the multi PRACH transmission based on a position order of random access channel (RACH) occasions (ROs).

33. A communication device, comprising a transceiver; a memory; a processor, respectively connected to the transceiver and the memory, configured to control wireless signal transmission and reception of the transceiver by executing computer executable instructions on the memory, and capable of implementing the method according to any of claims 1-21 or the method according to any of claims 22-30.

34. A computer storage medium, stored with computer executable instructions which, when executed by a processor, cause the method of any of claims 1-21 to be implemented, or the method of any of claims 22-30 to be implemented.
